(19) Europäisches Patentamt
European Patent Office
Office européen des brevets

(11) **EP 3 765 427 B1**

(12) **EUROPÄISCHE PATENTSCHRIFT**

(45) Veröffentlichungstag und Bekanntmachung des Hinweises auf die Patenterteilung:
**17.07.2024 Patentblatt 2024/29**

(21) Anmeldenummer: **18711883.1**

(22) Anmeldetag: **13.03.2018**

(51) Internationale Patentklassifikation (IPC):
**C04B 35/499** *(2006.01)* **C04B 35/64** *(2006.01)*

(52) Gemeinsame Patentklassifikation (CPC):
**C04B 35/499; C04B 35/64;** C04B 2235/3206;
C04B 2235/3251; C04B 2235/3255;
C04B 2235/6587; C04B 2235/768; C04B 2235/786;
C04B 2235/79; C04B 2235/80; C04B 2235/81;
Y02E 60/10

(86) Internationale Anmeldenummer:
**PCT/EP2018/056263**

(87) Internationale Veröffentlichungsnummer:
**WO 2019/174719 (19.09.2019 Gazette 2019/38)**

(54) **VERFAHREN ZUR HERSTELLUNG EINES POLYKRISTALLINEN KERAMISCHEN FESTKÖRPERS**

METHOD FOR PRODUCING A POLYCRYSTALLINE CERAMIC SOLID BODY

PROCÉDÉ DE FABRICATION D'UN CORPS SOLIDE CÉRAMIQUE POLYCRISTALLIN

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**20.01.2021 Patentblatt 2021/03**

(60) Teilanmeldung:
**23171851.1 / 4 234 515**

(73) Patentinhaber: **TDK Electronics AG**
**81671 München (DE)**

(72) Erfinder: **SCHWEINZGER, Manfred**
**8541 Schwanberg (AT)**

(74) Vertreter: **Epping - Hermann - Fischer Patentanwaltsgesellschaft mbH Schloßschmidstraße 5 80639 München (DE)**

(56) Entgegenhaltungen:
**WO-A1-00/26924 CN-A- 102 757 232**

• **JOE KELLY ET AL: "Effect of Composition on the Electromechanical Properties of (1-x)Pb(Mg 1/3 Nb 2/3 )O 3 -xPbTiO 3 Ceramics", J. AM. CERAM. SOC, 1 January 1997 (1997-01-01), pages 957 - 64, XP055477782, Retrieved from the Internet <URL:https://onlinelibrary.wiley.com/doi/pdf/10.1111/j.1151-2916.1997.tb02927.x> [retrieved on 20180523]**
• **JAMES A R ET AL: "Low temperature fabrication and impedance spectroscopy of PMN-PT ceramics", MATERIALS RESEARCH BULLETIN, ELSEVIER, KIDLINGTON, GB, vol. 34, no. 8, 8 October 1999 (1999-10-08), pages 1301 - 1310, XP004362487, ISSN: 0025-5408, DOI: 10.1016/S0025-5408(99)00127-0**

**Beschreibung**

Die Erfindung betrifft ein Verfahren zum Herstellen eines keramischen Festkörpers und ein Verfahren zur Herstellung einer Elektrode umfassend den Festkörper sowie einen verfahrensgemäß hergestellten Festkörper und eine verfahrensgemäß hergestellte Elektrode.

Aus dem Stand der Technik ist eine Vielzahl von keramischen Elektrodenmaterialien bekannt. Es besteht ein hoher Bedarf an Materialien, die sich für den Einsatz in Elektroden eignen und verbesserte Eigenschaften im Hinblick auf Effizienz und Verlustleistung der Elektroden zeigen. Joe Kelly et al., J. Am. Ceram. Soc., 1. Januar 1997, Seiten 957-61 beschreiben ein Verfahren zur Herstellung eines polykristallinen, keramischen Festkörpers.

Unten werden Materialien angegeben, die sich für den Einsatz in Elektroden eignen.

Ein erster Aspekt betrifft einen polykristallinen, keramischen Festkörper aufweisend

- eine Hauptphase mit einer Zusammensetzung der folgenden allgemeinen Formel:

$$(1-y)\,Pb_a(Mg_bNb_c)O_{3-e} \; + \; yPb_aTi_dO_3$$

mit

$$0{,}055 \leq y \leq 0{,}065;$$

$$0{,}95 \leq a \leq 1{,}02;$$

$$0{,}29 \leq b \leq 0{,}36;$$

$$0{,}63 \leq c \leq 0{,}69;$$

$$0{,}9 \leq d \leq 1{,}1;$$

$$0 \leq e \leq 0{,}1;$$

- und optional eine oder mehrere Nebenphasen,

wobei bei jedem Schnitt durch den Festkörper der Flächenanteil der Nebenphasen bezogen auf eine beliebige Schnittfläche durch den Festkörper kleiner oder gleich 0,5 Prozent ist, oder wobei der Festkörper frei von Nebenphasen ist.

Unter einem polykristallinen Festkörper ist hierbei ein kristalliner Festkörper zu verstehen, der Kristallite, die im Folgenden auch als Körner bezeichnet werden, aufweist. Die Kristallite sind durch Korngrenzen voneinander getrennt. Der Festkörper enthält also Körner, die das Material der Hauptphase enthalten oder daraus bestehen. Der Festkörper ist insbesondere gesintert.

Der Festkörper weist eine Hauptphase mit der allgemeinen Formel

$$(1-y)\,Pb_a(Mg_bNb_c)O_{3-e} \; + \; yPb_aTi_dO_3$$

auf. Hierbei handelt es sich um ein einphasiges System. Die Bleimagnesiumniobat-Komponente, $Pb_a(Mg_bNb_c)O_{3-e}$, und die Bleititanat-Komponente, $Pb_aTi_dO_3$, bilden also gemeinsam eine feste Lösung, also eine einzige Phase, bei der es sich um die Hauptphase des polykristallinen, keramischen Festkörpers handelt. Die Hauptphase zeichnet sich durch eine Perowskitstruktur aus.

Der polykristalline, keramische Festkörper kann eine oder mehrere weitere von der Hauptphase verschiedene Phasen aufweisen, die im Folgenden als Nebenphasen bezeichnet werden. Es ist ein zentrales Merkmal der Erfindung, dass der Festkörper nur einen geringen Anteil an Nebenphasen aufweist oder gänzlich frei von Nebenphasen ist. So ist bei einem beliebigen Schnitt durch den Festkörper der Flächenanteil sämtlicher Nebenphasen zusammengerechnet bezogen auf die Schnittfläche durch den Festkörper, kleiner oder gleich 0,5 Prozent.

Es ist bevorzugt, wenn der Festkörper frei von Nebenphasen ist. In diesem Fall enthält der Festkörper nur die Hauptphase und weist keine Nebenphase auf. Insbesondere kann der Festkörper aus der Hauptphase bestehen.

Unter einer Nebenphase ist grundsätzlich jede in ihrer Zusammensetzung von der Hauptphase abweichende eigenständige Phase zu verstehen. Ohne durch die Theorie gebunden zu sein kann es sich bei der Nebenphase um eine Mg-reiche von der Zusammensetzung der Hauptphase verschiedene Zusammensetzung handeln, wie etwa eine $Mg_{2/3}Nb_{1/3}O_3$-Phase. Eine Mg-reiche Nebenphase weist einen im Gegensatz zur Hauptphase erhöhten Mg-Gehalt auf. Beispielsweise kann die Mg-reiche Nebenphase zugleich Pb-arm sein, also einen niedrigeren Gehalt an Pb aufweisen als die Hauptphase.

Beispielsweise kann es sich bei einer Nebenphase aber auch um eine Pb-reiche Nebenphase handeln, also eine Nebenphase, die einen gegenüber der Hauptphase erhöhten Pb-Gehalt aufweist.

Da sich Nebenphasen in ihrer elementaren Zusammensetzung von der Hauptphase unterscheiden, ist es möglich den Flächenanteil der Nebenfläche bezogen auf eine Schnittfläche durch den Festkörper mittels Elementverteilungsbildern zu quantifizieren. Solche Elementverteilungsbilder können mittels REM-EDX-Messungen erhalten werden (REM steht für Rasterelektronenmikroskopie; EDX steht für Energiedispersive Röntgenspektroskopie).

Der polykristalline, keramische Festkörper zeichnet sich durch eine hohe mechanische Stabilität aus. Bauteile wie etwa Elektroden, die aus diesem Material geformt werden, sind daher robust und beständig.

Außerdem weisen die Festkörper eine hohe Durchbruchsspannung auf. Eine solche ist wichtig für eine sichere Anwendung als Elektrodenmaterial.

Der Festkörper eignet sich nicht zuletzt aufgrund seiner hohen Dielektrizitätskonstante und Kapazität für den Einsatz als Elektrodenmaterial.

Die beschriebene Zusammensetzung der Hauptphase ermöglicht eine unerwartet hohe Kapazität in einem Temperaturbereich zwischen 20 und 45°C, insbesondere zwischen 30 und 42°C. Eine hohe Kapazität in diesem Bereich ist besonders günstig für den Einsatz in einer Reihe von Keramikelektroden. Das Kapazitätsmaximum lässt sich beispielsweise durch den Anteil von Bleititanat, y, innerhalb der Formel

$$(1-y)\,Pb_a\,(Mg_b Nb_c)\,O_{3-e}\ +\ yPb_a Ti_d O_3$$

variabel einstellen. Durch eine Wahl von y in dem Bereich $0,055 \leq y \leq 0,065$ lassen sich keramische Festkörper erzielen, die ein Maximum der elektrischen Kapazität im Bereich der Körpertemperatur von Säugetieren erreichen.

Die Anmelder haben erkannt, dass mit Hilfe des y-Gehalts die Kapazität an die jeweilige Temperatur angepasst werden kann, bei der die Elektroden betrieben werden. So ist es möglich für die jeweils gewünschte Betriebstemperatur eine maximale Kapazität einzustellen.

Festkörper mit $0,055 \leq y \leq 0,065$ sind für Elektroden geeignet, die in einem Temperaturbereich zwischen 20 und 45°C betrieben werden. Ein y-Gehalt zwischen 0,055 und 0,065 ist insbesondere im Temperaturbereich zwischen 30 und 42°C, z.B. bei einer Temperatur von 35 und 40°C (z.B. 37°C) besonders vorteilhaft. Elektroden auf der Basis eines Festkörpers dieser Zusammensetzung besitzen nicht nur eine sehr hohe Kapazität im genannten Temperaturbereich sondern zugleich auch einen sehr geringen Verlustfaktor und eine geringe Selbsterwärmung.

Der polykristalline, keramische Festkörper unterscheidet sich von herkömmlichen keramischen Festkörpern zusätzlich dadurch, dass er keine oder nur einen sehr geringen Anteil an Nebenphasen aufweist. Es wurde beobachtet, dass in auf herkömmliche Weise hergestellten, keramischen Festkörpern enthaltend eine Hauptphase einer vergleichbaren chemischen Zusammensetzung ein deutlicher Anteil an Nebenphasen vorhanden ist.

Weiter wurde in Experimenten festgestellt, dass diese Nebenphasen die elektrische Kapazität des Festkörpers verringern. Eine hohe Kapazität ist aber gerade bei einer Verwendung in Elektroden wünschenswert.

Außerdem konnte experimentell beobachtet werden, dass die in herkömmlichen keramischen Festkörpern vorliegenden Nebenphasen bei einer Verwendung in hochkapazitiven Keramikelektroden zu einer schlechteren Verlustleistung führen. Dies führt zu höheren Energieverlusten und damit zu einer geringeren Effizienz.

Die höheren elektrischen Verluste und ihre Abgabe in Form von Wärme führen zudem zu einer Selbsterwärmung des Festkörpers.

Eine solche Selbsterwärmung ist unerwünscht. Sie ist das Ergebnis von Energieverlusten in Form von Abwärme und deutet auf eine geringe Effizienz hin. Außerdem ist Selbsterwärmung auch unerwünscht, da die Wärme in der Umgebung der Elektrode Schäden hervorrufen kann oder bei Berührung als unangenehm empfunden werden kann.

Durch die Einstellung eines Anteils der Nebenphasen von kleiner oder gleich 0,5 Prozent (Flächenanteil bezogen auf beliebige Schnittfläche durch den Festkörper) ist es den Erfindern der vorliegenden Erfindung gelungen die Dielektrizitätskonstante und die elektrische Kapazität zu steigern. Auch konnten verbesserte Verlustleistungen erzielt werden, was die Effizienz beim Einsatz in Keramikelektroden verbessert und die unerwünschte Selbsterwärmung vermindert.

Diese positiven Effekte sind umso stärker ausgeprägt, je geringer der Anteil der Nebenphasen am Festkörper ist.

Darüber hinaus konnte beobachtet werden, dass sich durch eine Vermeidung eines nennenswerten Anteils an Nebenphasen auch das optische Erscheinungsbild des keramischen Festkörpers verändern lässt. So zeichnen sich herkömmliche keramische Festkörper verwandter Zusammensetzung oftmals durch einen gelblichen Farbton aus. Demgegenüber weist der hier offenbarte keramische Festkörper keinen vergleichbaren gelben Farbton auf.

Je geringer der Anteil an Nebenphasen am Festkörper umso geringer ist der gelbliche Farbanteil. Der gelbliche Farbton spiegelt also die Anwesenheit von Nebenphasen wider. Der hier offenbarte keramische Festkörper zeichnet sich dagegen durch eine leicht beige Farbtönung aus.

Gemäß einer Ausführungsform des polykristallinen, keramischen Festkörpers ist bei jedem Schnitt durch den Festkörper der Flächenanteil der Nebenphasen bezogen auf eine beliebige Schnittfläche durch den Festkörper kleiner oder gleich 0,3 Prozent, bevorzugt kleiner oder gleich 0,1 Prozent, weiter bevorzugt kleiner oder gleich 0,05 Prozent, insbesondere bevorzugt kleiner oder gleich 0,01 Prozent. Am meisten bevorzugt ist es, wenn der polykristalline, keramische Festkörper frei von Nebenphasen ist.

Je kleiner der Anteil der Nebenphasen am Festkörper, umso höher ist die Dielektrizitätskonstante, die elektrische Kapazität und umso geringer sind die Leistungsverluste. Folglich führt ein geringerer Anteil an Nebenphasen auch zu einer geringeren Selbsterwärmung. Außerdem nimmt mit abnehmendem Anteil der Nebenphasen die gelbliche Farbtönung des keramischen Festkörpers ab.

Gemäß einer Ausführungsform ist der Festkörper frei von Pyrochloren, wie zum Beispiel die stabile kubische Pyrochlorphase $Pb_3Nb_4O_{13}$. Pyrochlorphasen treten besonders dann auf, wenn freies $Nb_2O_5$ beim Sintern vorhanden ist bzw. wenn ein Mangel an PbO herrscht.

Gemäß einer Ausführungsform weist der Festkörper keine Mg- und/oder Nb-reiche Nebenphase auf, insbesondere keine Mg-reiche Nebenphase. Beispielsweise enthält der Festkörper, ohne im Hinblick auf die genaue Formel durch die Theorie gebunden zu sein, keine $Mg_{2/3}Nb_{1/3}O_3$-Phase. Derartige Nebenphasen können vor allem bei einem Mangel an Pb während des Sinterns entstehen, der unter anderem beim Sintern durch Abgasen von PbO auftreten kann.

Gemäß einer weiteren Ausführungsform weist der Festkörper keine Pb-reiche Nebenphase auf. Die Erfinder haben erkannt, dass nicht nur ein Unterschuss, sondern auch ein Überschuss an Pb zur Bildung unerwünschter Nebenphasen führen kann. Pb-reiche Nebenphasen führen wie auch die anderen zuvor beschriebenen Nebenphasen zu einer Verringerung der elektrischen Kapazität.

Eine Ausführungsform betrifft den Festkörper, wobei gilt: $0,057 \leq y \leq 0,063$, beispielsweise ist y gleich 0,06.

Eine weitere Ausführungsform betrifft den Festkörper, wobei für den Koeffizienten a gilt: $0,96 \leq a \leq 1,02$, bevorzugt $0,97 \leq a \leq 1,01$, weiter bevorzugt $0,97 \leq a \leq 1,00$ und am meisten bevorzugt ist a = 1,0.

Eine Ausführungsform betrifft den Festkörper, wobei für den Koeffizienten b gilt: $0,31 \leq b \leq 0,36$. Bevorzugt gilt für b: $0,33 \leq b \leq 0,35$.

Eine Ausführungsform betrifft den Festkörper, wobei für den Koeffizienten c gilt: $0,63 \leq c \leq 0,68$. Bevorzugt gilt für c: $0,64 \leq c \leq 0,66$. Wenn c kleiner 0,68, insbesondere kleiner als 0,66 ist, weist der keramische Festkörper keinen erhöhten bis hin zu einem leicht erniedrigten Nb-Gehalt auf, was sich günstig auf die Vermeidung von Pyrochlorphasen auswirkt.

Eine weitere Ausführungsform betrifft den Festkörper, wobei für den Koeffizienten d gilt: $0,95 \leq d \leq 1,05$, bevorzugt ist d = 1,0.

Eine Ausführungsform betrifft den keramischen Festkörper, wobei für e gilt: $0 \leq e \leq 0,09$. Bevorzugt ist e gleich 0. In diesem Fall gilt für die Zusammensetzung der Hauptphase die allgemeine Formel:

$$(1-y)\,Pb_a\,(Mg_b Nb_c)\,O_3 \; + \; yPb_a Ti_d O_3$$

Je nach den Wertigkeiten, beispielsweise von Niobium, in der ersten Komponente kann der Fall auftreten, dass der Sauerstoffgehalt der Komponente $(1-y)Pb_a(Mg_bNb_c)O_3$ vom Wert 3 geringfügig hin zu Werten kleiner als 3 abweicht. Bevorzugt beträgt diese Abweichung weniger als 0,09. In der Regel besteht keine nennenswerte Abweichung und e ist gleich 0. Eine weitere Ausführungsform betrifft denFestkörper, wobei die Hauptphase Körner aufweist oder aus Körnern besteht, deren mittlere Korngröße $d_{50}$, gemessen als zahlenbezogener Medianwert durch statische Bildanalyse, größer als 4,0 $\mu$m, bevorzugt größer als 4,5 $\mu$m, insbesondere bevorzugt größer als 5,0 $\mu$m ist.

Beispielsweise liegt die mittlere Korngröße $d_{50}$, gemessen als zahlenbezogener Medianwert durch statische Bildanalyse, in einem Bereich zwischen 4,0 und 9 $\mu$m, bevorzugt zwischen 4,5 und 8 $\mu$m, weiter bevorzugt zwischen 5,0 und 7 $\mu$m, insbesondere bevorzugt zwischen 5,0 und 6,0 $\mu$m.

Vorzugsweise werden die einzelnen Körner bei der statischen Bildanalyse, über einen mittleren Durchmesser auf der Grundlage des sogenannten kreisäquivalenten Durchmessers (Englisch: "equal circle diameter (ECD)") bestimmt. Die Körner bzw. Kristallite eines polykristallinen Festkörpers weisen eine unregelmäßige dreidimensionale Struktur auf. Mittels einer EDX/EBSD-Analyse im Raster-Elektronenmikroskop kann eine 2D-Projektion der Körner erhalten werden (EDX/EBSD-Überlagerungsbild). Auf diesem Weg lässt sich die Korngröße über die Größe der Fläche der 2D-Projektion des Korns ausdrücken. Aus der letztgenannten Fläche kann schließlich der ECD bestimmt werden. Dazu wird der Durchmesser eines Kreises berechnet, dessen Fläche der gemessenen 2D-Projektion des Korns entspricht. In dieser Anmeldung werden mittlere Korngrößen folglich über den Flächendurchschnitt ermittelt.

Größere mittlere Korndurchmesser bedingen größere "Domänen" im Festkörper, also Bereiche innerhalb derer elektrische Dipole die gleiche Ausrichtung aufweisen, was wiederum die Bildung größerer Dipolmomente und damit eine höhere Dielektrizitätskonstante $\varepsilon$ für den Festkörper mit sich bringt. Es handelt sich hierbei um einen kooperativen Effekt der in der Summe eine Erhöhung der elektrischen Kapazität des polykristallinen, keramischen Festkörpers bewirkt. Je größer die mittlere Korngröße, umso höher ist folglich die elektrische Kapazität.

Die Erfinder der vorliegenden Erfindung haben festgestellt, dass durch eine Verfahrensführung, die Nebenphasen vermeidet, zugleich polykristalline, keramische Festkörper mit größeren mittleren Korngrößen $d_{50}$, gemessen als zahlenbezogener Medianwert durch statische Bildanalyse, erhalten werden. Die Vermeidung von Nebenphasen und die Erzeugung von größeren Körnern stehen also miteinander in einem Zusammenhang und ermöglichen es die elektrischen Eigenschaften des keramischen Festkörpers zu verbessern.

Gemäß einer Ausführungsform weist der Festkörper Poren auf. Bevorzugt zeigen die Festkörper jedoch insgesamt eine geringe Porosität und neigen folglich zu keiner nennenswerten Absorption von Feuchtigkeit, welche die elektrischen Eigenschaften in unerwünschter Weise beeinflussen könnte.

Beispielsweise kann das Porenvolumen bezogen auf das Gesamtvolumen des Festkörpers kleiner als 10%, bevorzugt kleiner als 5%, insbesondere bevorzugt kleiner als 2% sein. Es ist auch denkbar, dass der Festkörper frei von Poren ist. Die geringe Neigung zur Absorption von Feuchte spiegelt sich darin wider, dass bei einer Impedanz-Messung in Salzlösung die Leerlaufspannung (OCV = open circuit potential) erhalten wird.

Gemäß einer Ausführungsform weist der Festkörper eine Pressdichte von 4 bis 5,5 g/ml auf, bevorzugt 4,5 bis 5,9 g/ml, z.B. 4,8 g/ml.

Gemäß einer Ausführungsform weist der keramische Festkörper im Rahmen von Impedanz-Messungen einen DC-Widerstand größer als $10^8$ Ohm auf.

Gemäß einer Ausführungsform weist der Festkörper in flüssiger Umgebung eine Durchbruchsspannung größer als 4000 V auf. Dies ermöglicht eine sichere Anwendung.

Gemäß einer Ausführungsform weist der keramische Festkörper eine Kapazität von über 50 nF bei 200 kHz und 1 V in einem Temperaturbereich von 30-42°C auf, insbesondere über 52 nF, z.B. 52-58 nF. Gemäß einer Ausführungsform beträgt die maximale Kapazität des keramischen Festkörpers mindestens 53 nF, Z.B. 53-58 nF bei 200 kHz und 1 V in einem Temperaturbereich von 30-42°C.

Gemäß einer Ausführungsform weist der Festkörper keine mit dem menschlichen Auge sichtbaren Risse auf. Die Zusammensetzung weist eine gute Homogenität und Stabilität auf, sodass eine Rissbildung vermieden werden kann.

Ein zweiter Aspekt betrifft eine Elektrode aufweisend einen polykristallinen, keramischen Festkörper gemäß dem ersten Aspekt und weiterhin eine auf dem Festkörper aufgebrachte elektrische Kontaktierung.

Ein mit einer elektrischen Kontaktierung versehener erfindungsgemäßer keramischer Festkörper bildet eine Elektrode.

Gemäß einer Ausführungsform weist die Elektrode genau einen keramischen Festkörper und genau eine elektrische Kontaktierung auf.

Gemäß einer Ausführungsform weist die elektrische Kontaktierung ein edles Metall, insbesondere Silber auf oder besteht aus Silber. Silber neigt, auch wenn es hohen Temperaturen ausgesetzt ist, nicht zur Korrosion. Zudem ist es lötbar und gut zu verarbeiten.

Gemäß einer Ausführungsform ist die elektrische Kontaktierung fest mit einer Seite des keramischen Festkörpers verbunden und nur mit einem Zugwert größer als 35 N vom keramischen Festkörper zu trennen. So wird eine Elektrode mit einer Kontaktierung erhalten, die besonders zugstabil ist.

Insbesondere betrifft die beanspruchte Erfindung ein Verfahren gemäß Anspruch 1 zur Herstellung eines polykristallinen, keramischen Festkörpers aufweisend

- eine Hauptphase mit einer Zusammensetzung der folgenden allgemeinen Formel:

$$(1-y)\,Pb_a(Mg_bNb_c)\,O_{3-e}\ +\ yPb_aTi_dO_3$$

mit

$$0,055\ \leq\ y\ \leq\ 0,065;$$

$$0,95 \leq a \leq 1,02;$$

$$0,29 \leq b \leq 0,36;$$

$$0,63 \leq c \leq 0,69;$$

$$0,9 \leq d \leq 1,1;$$

$$0 \leq e \leq 0,1;$$

- und optional eine oder mehrere Nebenphasen,

wobei bei jedem Schnitt durch den Festkörper der Flächenanteil der Nebenphasen bezogen auf eine beliebige Schnittfläche durch den Festkörper kleiner oder gleich 0,5 Prozent ist oder wobei der Festkörper frei von Nebenphasen ist,
umfassend die Verfahrensschritte:

A) Bereitstellen von Ausgangsstoffen umfassend die Elemente Mg, Nb, Ti und Pb;
B) Erzeugen einer Mischung umfassend die Ausgangsstoffe
C) Kalzinieren der Mischung zum Erzeugen einer kalzinierten Mischung
E) Verarbeitung der kalzinierten Mischung zu einem Grünkörper
F) Sintern des Grünkörpers,

wobei zur Kontrolle des Bleihaushalts

- Schritt F) in einem geschlossenen System erfolgt. Weiter kann in Schritt A) oder einem anderen der Schritt F) vorausgehenden Schritte ein Pb aufweisender Ausgangsstoff im Überschuss zugegeben wird.

Bei dem mit dem Verfahren hergestellten polykristallinen, keramischen Festkörper handelt es sich insbesondere um einen Festkörper gemäß dem ersten Aspekt. Alle in diesem Zusammenhang als vorteilhaft beschriebenen Ausführungsformen des keramischen Festkörpers sind auch im Hinblick auf das Verfahren als weiterführende Ausführungsformen anzusehen. Unter einem geschlossenen System im Sinne der vorliegenden Erfindung ist insbesondere ein System - z.B. ein Behälter der etwa als Kapsel gestaltet sein kann - zu verstehen, das keinen Gasaustausch mit der Umgebung gestattet.

Das erfindungsgemäße Verfahren erlaubt es über die Kontrolle des Bleihaushaltes die Entstehung von unerwünschten Nebenphasen zu vermeiden.

Dagegen kommt es bei herkömmlichen Verfahren beim Sintern zu einem unkontrollierten Verlust an Blei. Insbesondere kann Pb beim Sintern in einem Ofen in Form von PbO ausgasen. Bei den hohen Sintertemperaturen wird dem Grünkörper somit Pb entzogen, was lokal zur Bildung von Pb-armen bzw. Mg-reichen Nebenphasen führt. Dies wird im erfindungsgemäßen Verfahren verhindert, indem Blei vor dem Sintervorgang im Überschuss zugegeben wird oder indem das Sintern in einem geschlossenen System erfolgt, das ein Ausgasen von PbO effizient unterbindet. Insbesondere können auch beide Maßnahmen miteinander kombiniert werden, da auch in einem geschlossenen System noch eine obgleich begrenzte Menge an PbO in die Gasphase übergehen kann, auch wenn sich eine Sättigung einstellt und sie das geschlossene System nicht verlassen kann. Durch Kombination eines Pb-Überschusses und gleichzeitigen Sinterns in einem geschlossenen System konnten Nebenphasen besonders effektiv reduziert oder vollständig vermieden werden. Ein anfänglicher Pb-Überschuss unterstützt zudem die Vermeidung von Pyrochlorphasen als Nebenphasen.

Die Erfinder der vorliegenden Erfindung konnten feststellen, dass das erfindungsgemäße Verfahren unerwarteter Weise nicht nur eine Vermeidung von Nebenphasen ermöglicht, sondern zugleich zu größeren Korngrößen des polykristallinen, keramischen Festkörpers führt. Dies ermöglicht gemeinsam mit der Vermeidung von unerwünschten Nebenphasen eine Erhöhung der Dielektrizitätskonstante des erhaltenen keramischen Festkörpers. Außerdem werden verbesserte Kapazitäten und günstigere Verlustleistungen erhalten sowie eine unerwünschte gelbliche Farbtönung vermieden.

Bei den Ausgangsstoffen, die in Schritt A) bereitgestellt werden, kann es sich beispielsweise um Oxide, Hydroxide, Carbonate, Nitrate, Acetate oder vergleichbare Salze der Elemente Mg, Nb, Ti und Pb handeln. Bevorzugt handelt es sich um Oxide der Elemente Mg, Nb, Ti und Pb sowie um Oxide von zwei oder mehr der Elemente Mg, Nb, Ti und Pb. Diese Verbindungen sind in der Regel zu vertretbaren Preisen im Handel erhältlich oder können ohne großen experimentellen Aufwand hergestellt werden.

Gemäß einer Ausführungsform des erfindungsgemäßen Verfahrens wird in Schritt A) ein erster Ausgangsstoff bereitgestellt, bei dem es sich um einen Mg- und Nb-haltigen Ausgangsstoff handelt. Bevorzugt ist es, wenn es sich bei dem ersten Ausgangsstoff um $Mg_{1/3}Nb_{2/3}O_2$ handelt. Die Verwendung von $Mg_{1/3}Nb_{2/3}O_2$ als erster Ausgangsstoff begünstigt die Vermeidung von unerwünschten Pyrochlorphasen, wie $Pb_3Nb_4O_{13}$, als Nebenphasen. Wenn $Mg_{1/3}Nb_{2/3}O_2$ als erster Ausgangsstoff gewählt wird, lässt sich bei dem Verfahren auch von einem Verfahren gemäß der Columbit-Methode sprechen.

Gemäß einer Ausführungsform des erfindungsgemäßen Verfahrens geht dem Schritt A) ein separater Schritt A0) zur Herstellung von $Mg_{1/3}Nb_{2/3}O_2$ voraus. $Mg_{1/3}Nb_{2/3}O_2$ lässt sich beispielsweise aus Magnesiumoxid (MgO) und Niobiumoxid ($Nb_2O_5$), z.B. durch Nassvermahlen, anschließender Trocknung (Filterpresse, Sprühtrocknen), darauffolgendem Kalzinieren und gegebenenfalls einem abschließenden Mahlschritt herstellen.

Gemäß einer Ausführungsform des erfindungsgemäßen Verfahrens wird in Schritt A) ein zweiter Ausgangsstoff bereitgestellt, bei dem es sich um einen Ti-haltigen Ausgangsstoff handelt. Bevorzugt dient $TiO_2$ als zweiter Ausgangsstoff. $TiO_2$ ist vergleichsweise preiswert und leicht erhältlich.

Gemäß einer weiteren Ausführungsform des erfindungsgemäßen Verfahrens wird in Schritt A) ein dritter Ausgangsstoff bereitgestellt, bei dem es sich um einen Pb-haltigen Ausgangsstoff handelt. Insbesondere haben sich die Pb-Oxide, PbO und $Pb_3O_4$, als gut geeignet erwiesen. Sie ermöglichen eine gute Reaktionsführung und unterstützten die Kontrolle des Bleihaushalts.

Gemäß einer Ausführungsform handelt es sich bei dem dritten Ausgangsstoff um $Pb_3O_4$. $Pb_3O_4$ zersetzt sich bei Temperaturen ab ca. 500°C und setzt dabei PbO frei. $Pb_3O_4$ besitzt eine geringere Toxizität als PbO, sodass sein Einsatz die Arbeitssicherheit verbessert. Durch die Wahl von $Pb_3O_4$ anstelle von PbO ist es möglich die Bestückung der Reaktionsgefäße und Reaktoren sicherer zu gestalten. Dies ist insbesondere für die großtechnische und industrielle Fertigung des keramischen Festkörpers von Bedeutung.

Gemäß einer Ausführungsform werden die Ausgangsstoffe in Schritt A) in stöchiometrischen Anteilen zueinander bereitgestellt. In diesem Fall erfolgt Schritt F) in einem geschlossenen System, um einen Verlust von Pb beim Sintern, durch Ausgasen von PbO zu verhindern.

Gemäß einer weiteren Ausführungsform werden in Schritt A) alle nicht Pb-haltigen Ausgangsstoffe in stöchiometrischen Anteilen zueinander bereitgestellt, während der Pb-haltige Ausgangsstoff im Überschuss zugegeben wird. Die Erfinder der vorliegenden Erfindung haben festgestellt, dass ein Pb-Überschuss in Schritt A) eine Vermeidung von Pb-armen bzw. Mg- und/oder Nb-reichen Nebenphasen ermöglicht.

Gemäß einer bevorzugten Ausführungsform wird der Überschuss des Pb-haltigen Ausgangsstoffs (bzw. des dritten Ausgangsstoffs) so gewählt, dass der Pb-Gehalt sämtlicher bereitgestellter Ausgangsstoffe bis zu 0,02 mol pro 1 mol Pb der zu erzielenden Zusammensetzung der Hauptkomponente,

$$(1-y)Pb_a(Mg_bNb_c)O_{3-e} + yPb_aTi_dO_3,$$

beträgt.

Bevorzugt beträgt der genannte Überschuss zwischen 0,01 mol und 0,02 mol. Die Erfinder der vorliegenden Erfindung haben beobachtet, dass im zuletzt genannten Fall sowohl Pb-arme wie auch Pb-reiche Nebenphasen besonders gut vermieden werden können.

Gemäß einer Weiterbildung handelt es sich bei dem Pb-haltigen Ausgangsstoff um PbO. In diesem Fall werden die Ausgangsstoffe in einer Menge bereitgestellt, sodass ihre Stöchiometrie zueinander theoretisch eine Zusammensetzung nach einer Reaktion ohne Pb-Verluste der folgenden allgemeinen Formel ergeben würde:

$$(1-y)Pb_a(Mg_bNb_c)O_{3-e} + yPb_aTi_dO_{3\,+}\,xPbO,$$

wobei a bis e wie oben angegeben definiert sind und wobei gilt $0 \leq x \leq 0,02$. Bevorzugt gilt: $0 < x \leq 0,02$, weiter bevorzugt gilt: $0,01 \leq x \leq 0,02$. PbO wird also in einem Überschuss bis zu 0,02 mol zugegeben, sodass die Zusammensetzung bis zu 0,02 mol überschüssiges Pb pro 1 mol angestrebtem Pb in der Hauptphase aufweist.

In analoger Weise kann statt PbO, $Pb_3O_4$ im Überschuss zugegeben werden. Falls es sich bei dem Pb-haltigen Ausgangsstoff um $Pb_3O_4$ handelt, wird $Pb_3O_4$ in einem Überschuss bis zu 0,0067 mol pro 1 mol Pb der zu erzielenden Zusammensetzung der Hauptkomponente zugegeben. Da 1 mol $Pb_3O_4$, 3 mol PbO freisetzt, entspricht dies wiederum einem Pb-Überschuss von bis zu 0,02 mol. Bevorzugt wird $Pb_3O_4$ in einem Überschuss zwischen 0,0033 mol und 0,0067 mol zugegeben. Dieser Anteil des Ausgangsstoffs $Pb_3O_4$ ist besonders geeignet, um Nebenphasen zu vermeiden und gute Korngrößen zu erzielen.

Gemäß einer Ausführungsform erfolgt das Erzeugen einer Mischung in Verfahrensschritt B) mittels Vermahlens der Ausgangstoffe, insbesondere Nass-Vermahlen. Beim Nass-Vermahlen erfolgt die Zerkleinerung der Ausgangstoffe in einer Suspension, z.B. einer wässrigen Suspension.

Das Vermahlen wird so lange fortgesetzt, bis die Ausgangstoffe Pulver bzw. Suspensionen mit Korngrößen von d50, gemessen als zahlenbezogener Medianwert durch statische Bildanalyse, < 1,5 $\mu$m, bevorzugt < 1 $\mu$m aufweisen.

Mischungen mit Korngrößen der genannten Art führen zu guten Ergebnissen bei der weiteren Verarbeitung. Sie gestatten eine gute Durchmischung und erleichtern es so bei der Kalzinierung eine gute Homogenität zu erzielen.

Gemäß einer Ausführungsform des erfindungsgemäßen Verfahrens schließt sich an das Nass-Vermahlen ein Trocknungsschritt B1) an. Der Trocknungsschritt dient der Vorbereitung der Kalzinierung.

Gemäß einer Ausführungsform erfolgt der Kalzinierungsschritt C) bei einer Temperatur zwischen 800 und 860°C, zum Beispiel bei 840°C. Diese Temperaturen gewährleisten eine effektive Entfernung von Feuchtigkeit.

Gemäß einer Weiterbildung der soeben genannten Ausführungsform erfolgt der Kalzinierungsschritt C) nicht in einem geschlossenen System, wie etwa einem geschlossenen Behälter, gemäß Schritt F). Dies ist nicht erforderlich, da die angegebenen Temperaturen nicht hoch genug sind, um einen nennenswerten PbO-Verlust hervorzurufen. Es ist aber auch grundsätzlich möglich den Kalzinierungsschritt ebenfalls in einem geschlossenen System durchzuführen.

Gemäß einer Ausführungsform umfasst das erfindungsgemäße Verfahren einen Schritt D), bei welchem $TiO_2$ und/oder $Nb_2O_5$ zur kalzinierten Mischung zugegeben wird. Schritt D) findet bevorzugt nach Schritt C) und vor Schritt F) statt.

Die Zugabe von $TiO_2$ und/oder $Nb_2O_5$ ermöglicht es das Maximum der elektrischen Kapazität des keramischen Festkörpers in Abhängigkeit von der Temperatur zu verschieben bzw. einzustellen.

Außerdem erlaubt es die Zugabe von $TiO_2$ und/oder $Nb_2O_5$ in Schritt D) überschüssiges Blei, etwa in Form von PbO, innerhalb der kalzinierten Mischung durch Bildung von Perowskitphasen zu verbrauchen. Die Zugabe von $TiO_2$ und/oder $Nb_2O_5$ in Verfahrensschritt D) stellt somit ein weiteres Mittel zur Kontrolle des Bleihaushalts dar. Beispielsweise erlaubt es die Kombination eines anfänglichen Pb-Überschusses der günstig ist, um Pyrochlorphasen zu vermeiden, in Kombination mit der Zugabe von $TiO_2$ und/oder $Nb_2O_5$ in Schritt D) den anfänglichen Pb-Überschuss abzubauen und so Gefahr eines Überschusses an Pb im fertigen Festkörper zu unterbinden. Letzterer führt zu einer Abnahme der Dielektrizitätskonstanten bzw. der Kapazität.

Gemäß einer Ausführungsform beträgt der Anteil an zugegebenem $TiO_2$ und/oder $Nb_2O_5$ bezogen auf die kalzinierte Mischung bis zu 0,4 Gewichtsprozent, bevorzugt 0,001 bis 0,4 Gewichtsprozent, weiter bevorzugt 0,01 bis 0,4 Gewichtsprozent, insbesondere bevorzugt 0,1 bis 0,4 Gewichtsprozent bezogen auf das Gewicht der kalzinierten Mischung .

Eine Ausführungsform betrifft das erfindungsgemäße Verfahren, wobei in Schritt A) ein Pb aufweisender Ausgangsstoff im Überschuss zugegeben wird und wobei das erfindungsgemäße Verfahren zugleich einen Schritt D) nach Schritt C) umfasst, bei welchem $TiO_2$ und/oder $Nb_2O_5$ zur kalzinierten Mischung zugegeben wird. Zudem ist es bevorzugt, wenn zugleich Schritt F) in einem geschlossenen System erfolgt. Anstatt überschüssiges Blei, abzudampfen ist es beispielsweise möglich $TiO_2$ und/oder $Nb_2O_5$ in einem Schritt D) zuzugeben, dass das überschüssige Blei bindet. Dies hat gegenüber dem Abdampfen von überschüssigem PbO im Sinterschritt den Vorteil, dass der resultierende polykristalline, keramische Festkörper insgesamt deutlich homogener ist. Die Diffusionsgeschwindigkeit von Blei im Festkörper ist um mehrere Größenordnungen geringer als in der Gasphase. Dies führt dazu, dass überschüssiges, oberflächennahes PbO rascher beim Sintern den Festkörper verlässt als PbO vom Inneren des Festkörpers nachdiffundieren kann. Insbesondere, wenn das Sintern nicht in einem geschlossenen System erfolgt, werden besonders große Mengen an PbO verdampft. Dies führt aufgrund der Unterschiede in den Diffusionsgeschwindigkeiten zu lokalen Inhomogenitäten im Festkörper, was wiederum die Bildung unerwünschter Nebenphasen begünstigt. Es ist somit besonders vorteilhaft, wenn überschüssiges Pb, das beispielsweise in Schritt A) in Form eines Überschusses des Pb-haltigen Ausgangsstoffs (dritter Ausgangsstoff) zugegeben wurde, durch Zugabe von $TiO_2$ und/oder $Nb_2O_5$ in Schritt D) kompensiert wird, wobei zugleich das Sintern in einem geschlossenen System erfolgt.

Eine Ausführungsform betrifft das erfindungsgemäße Verfahren, wobei Schritt E) umfasst:

- Mahlen der kalzinierten Mischung,
- Versetzen der kalzinierten Mischung mit einem Binder,
- Sprühtrocknen der kalzinierten Mischung mit Binder zur Erzeugung eines Keramikgranulats
- Verpressen des Keramikgranulats zur Erzeugung des Grünkörpers.

Das Mahlen der kalzinierten Mischung wird hierbei bevorzugt solange fortgesetzt, bis die erhaltene Korngrößen von d50, gemessen als zahlenbezogener Medianwert durch statische Bildanalyse < 2 $\mu$m, bevorzugt < 1 $\mu$m z.B. ca. 0,8 $\mu$m beträgt. Optional wird gemeinsam mit der kalzinierten Mischung $TiO_2$ und/oder $Nb_2O_5$, das in einem gegebenenfalls erfolgten Schritt D) zugegeben wurde, in Schritt E) gemahlen. Ein feines Vermahlen begünstigt den Erhalt eines homogenen Grünkörpers.

Der Anteil des Binders bezogen auf das Gewicht der kalzinierten Mischung beträgt bevorzugt zwischen 0,5 und 10 Gewichtsprozent, weiter bevorzugt zwischen 1 und 5 Gewichtsprozent, insbesondere zwischen 2 und 4 Gewichtsprozent, zum Beispiel 3 Gewichtsprozent. Bei dem Binder kann es sich beispielsweise um einen PVA-Binder (PVA = Polyvinylalkohol) handeln.

Durch Sprühtrocknung der kalzinierten Mischung mit Binder wird ein Keramikgranulat erhalten, aus dem sich durch Verpressen ein Grünkörper erzeugen lässt.

Der Grünkörper geht durch das Sintern gemäß Schritt F) in den erfindungsgemäßen keramischen Festkörper gemäß dem ersten Aspekt der Erfindung über.

Gemäß einer Ausführungsform des erfindungsgemäßen Verfahrens wird Schritt F) bei einer maximalen Temperatur von 1150 bis 1280°C durchgeführt. Beispielsweise kann das Verfahren bei einer maximalen Temperatur von 1250°C durchgeführt werden.

Gemäß einer Ausführungsform wird die maximale Temperatur während Schritt F) für 1 bis 6 Stunden, zum Beispiel für 4 Stunden gehalten.

Diese Temperaturen und Haltezeiten beim Sintern erlauben neben einer vollständigen Reaktion der Ausgangsstoffe gute Homogenitäten des resultierenden keramischen Festkörpers, was die Vermeidung unerwünschter Nebenphasen unterstützt.

Gemäß einer Ausführungsform des erfindungsgemäßen Verfahrens erfolgt Schritt F) in einem geschlossenen System, wobei es sich bei dem geschlossenen System um einen geschlossenen Behälter handelt.

Unter einem geschlossenen Behälter im Sinne der vorliegenden Erfindung ist insbesondere ein Behälter zu verstehen, zwischen dessen Innenraum und der Umgebung kein Gasaustausch stattfindet.

Gemäß einer Ausführungsform weist der Behälter eine Höhe von 10-40 cm, z.B. 15-25 cm, eine Breite von 20-50 cm, z.B. 25-35 cm und eine Tiefe von 30-50 cm, z.B. 35-45 cm auf.

Gemäß einer Ausführungsform weist der geschlossene Behälter zumindest eines der Materialien ausgewählt aus der Gruppe von $Al_2O_3$, $ZrO_2$ und $MgO$ auf oder der Behälter besteht aus einem dieser Materialien.

Bevorzugt weist der geschlossene Behälter $MgO$ auf oder besteht daraus. Die Erfinder haben herausgefunden, dass sich $MgO$ besonders gut eignet, da es eine ungewöhnlich hohe Dichtigkeit gegenüber $PbO$ aufweist und auch nicht zur Absorption von $PbO$ neigt. Beispielsweise ermöglicht es $MgO$ eine bessere Abdichtung gegenüber $PbO$ zu erreichen als dies mit herkömmlichen Behältermaterialien, wie etwa Cordierit oder Mullit möglich ist. Insbesondere neigt $MgO$ im Gegensatz zu anderen Metalloxiden auch nicht zur Absorption von $PbO$. Auf diese Art und Weise lässt sich eine bessere Abschirmung als bei herkömmlichen Behältermaterialien erreichen, sodass ein Ausgasen von $PbO$ besser verhindert werden kann als bei anderen Materialien, wie z.B. mit Cordierit oder Mullit als Behältermaterial.

Gemäß einer Ausführungsform weist der geschlossene Behälter einen Behälterkörper und eine Behälterplatte auf, die bevorzugt die soeben genannten Materialien enthalten oder daraus bestehen.

Gemäß einer Ausführungsform werden mehrere Grünkörper gleichzeitig in dem geschlossenen Behälter gesintert. Beispielsweise können mehrere Stapel von Grünkörpern gleichzeitig in dem geschlossenen Behälter gesintert werden. Beispielsweise können 5 bis 25 Stapel von je 5 bis 30 Grünkörpern in dem Behälter gesintert werden. Auf diese Weise wird durch die Gegenwart von mehreren Grünkörpern rascher eine Sättigung mit $PbO$ in dem geschlossenen Behälter erreicht, wodurch ein zu hoher unerwünschter Bleiverlust vermieden werden kann.

In dem erfindungsgemäßen Verfahren weist der geschlossene Behälter einen Innenraum auf, in welchem ein oder mehrere Grünkörper angeordnet sind, wobei der Volumenfüllgrad aller Grünkörper bezogen auf das Volumen des Innenraums mindestens 30 Vol.%, bevorzugt mindestens 40 Vol.% beträgt.

Der Volumenfüllgrad gibt das Verhältnis des Gesamtvolumens aller Grünkörper, die im Innenraum des geschlossenen Behälters angeordnet und gesintert werden, bezogen auf das Gesamtvolumen des Innenraums des geschlossenen Behälters an.

$$Volumenf\ddot{u}llgrad = \frac{Volumen\ aller\ Gr\ddot{u}nk\ddot{o}rper}{Volumen\ Innenraum\ Beh\ddot{a}lter} \cdot 100\ [Vol.\%]$$

Sofern sich nur ein einziger Grünkörper im geschlossenen Behälter befindet, ist das "Volumen aller Grünkörper" gleich dem Volumen dieses einzelnen Grünkörpers. Falls sich mehrere Grünkörper im geschlossenen Behälter befinden, ist das "Volumen aller Grünkörper" gleich der Summe der Einzelvolumina der Grünkörper, die im Innenraum des geschlossenen Behälters angeordnet sind.

Ein Volumenfüllgrad von 0 Vol.% würde bedeuten, dass der geschlossene Behälter leer ist, also keinen Grünkörper enthält. Ein Volumenfüllgrad von 100 Vol.% würde bedeuten, dass der Behälter vollständig mit dem oder den Grünkörpern ausgefüllt ist, wobei keine Zwischenräume verbleiben würden.

Die Erfinder der vorliegenden Erfindung haben beobachtet, dass ein Volumenfüllgrad von mindestens 30 Vol.% besonders gut geeignet ist, um Pb-Verluste beim Sintern gering zu halten. Bei einem Volumenfüllgrad von mindestens 30 Vol.% lässt sich rasch eine Sättigung von PbO im Innenraum des geschlossenen Behälters erreichen. Auf diese Weise wird der Übertritt von weiterem PbO in die Gasphase erschwert. Dies ermöglicht es einen bevorzugt vorhandenen Pb-Überschuss im Grünkörper beim Sintern langsam und kontrolliert abzubauen. Ein Unterschuss an Pb im resultierenden keramischen Festkörper kann so verringert oder ganz vermieden werden, was die Vermeidung unerwünschter Nebenphasen unterstützt.

Je geringer der Volumenfüllgrad des Behälters ist, umso mehr PbO geht in die Gasphase im Innenraum des geschlossenen Behälters über und umso mehr wird die Kontrolle des Bleihaushalts erschwert.

Noch besser eignet sich ein Volumenfüllgrad von mindestens 40 Vol.%. Dies ermöglicht eine besonders effiziente Kontrolle des Bleihaushalts.

Gemäß einer weiteren Ausführungsform beträgt der Volumenfüllgrad weniger als 60 Vol.%. Die Erfinder haben erkannt, dass es günstig ist, wenn der Volumenfüllgrad 60 Vol.% nicht überschreitet. Wenn der Volumenfüllgrad höher ist, lassen sich die Grünkörper nur noch schwer so im geschlossenen Behälter anordnen, dass sie hinreichend voneinander separiert sind, um gemeinsam gesintert zu werden.

Gemäß einer besonders bevorzugten Ausführungsform beträgt der Volumenfüllgrad zwischen 30 und 60 Vol.%, bevorzugt zwischen 40 und 60 Vol.%. In diesem Fall tritt weder ein nennenswerter Pb-Überschuss noch ein größerer Pb-Unterschuss im resultierenden keramischen Festkörper auf, was zur Folge hat, dass Pb-reiche wie Pb-arme Nebenphasen vermieden werden können.

Die Erfinder konnten beispielsweise beobachten, dass ein Volumenfüllgrad von 45 Vol.% der Grünkörper in einem Behälter aufweisend MgO, lediglich zu einem Gewichtsverlust des Grünkörpers von ca. 0,6 Gewichtsprozent bedingt durch ein Abdampfen von PbO führt. Ein derartig geringer Bleiverlust ermöglicht eine exzellente Bleihaushaltskontrolle und somit eine effektive Vermeidung unerwünschter Nebenphasen.

Gemäß einer Ausführungsform beträgt der Volumenfüllgrad mindestens 30 Vol.% und zugleich ist der erste Ausgangsstoff $Mg_{1/3}Nb_{2/3}O_2$ und der Pb aufweisende Ausgangsstoff ist $Pb_3O_4$, wobei das Verhältnis der Stoffmengen von $Mg_{1/3}Nb_{2/3}O_2$ und $Pb_3O_4$ 1 : 0,34 bis 1 : 0,38 beträgt, bevorzugt 1 : 0,35 bis 1 : 0,37, weiter bevorzugt 1 : 0,355 bis 1 : 0,36, zum Beispiel 1 : 0,356 bis 1: 0,358. Diese Rahmenbedingungen erlauben es unter Einhaltung hoher Anforderungen an die Sicherheit eine exzellente Bleihaushaltskontrolle unter Erhalt eines keramischen Festkörpers, der frei von Nebenphasen ist und hervorragende Werte im Hinblick auf die Kapazität und die Verlustleistung ermöglicht. Weiterhin kann in diesem Fall der Ti-haltige Ausgangsstoff zum Beispiel $TiO_2$ sein und das Verhältnis der Stoffmengen von $Mg_{1/3}Nb_{2/3}O_2$ und des Ti-haltigen Ausgangsstoffs kann beispielsweise 1 : 0,055 bis 1 : 0,065 sein.

Gemäß einer Ausführungsform erfolgt das Sintern in einem Ofen, in dem der geschlossene Behälter angeordnet ist. Ein weiterer wichtiger Effekt des erfindungsgemäßen Verfahrens ist, dass durch die Verwendung eines geschlossenen Behälters in Schritt F) der zum Sintern verwendete Ofen vor PbO-Abgasen geschützt wird. Pb-haltige Abgase führen dazu, dass die Innenverkleidung des Ofens mit der Zeit eine erhebliche Menge an Pb aufnimmt. Dies führt zu einer Beschädigung der für die Innenverkleidung verwendeten Materialien. Da diese oftmals Silikate bzw. Alumosilikate enthalten neigen sie bei Aufnahme von Blei zum "Verglasen". Aber auch andere Arten der Innenverkleidung von Öfen können durch Pb-Aufnahme geschädigt werden. Die Innenverkleidung wird durch die Aufnahme von Blei mit der Zeit spröde, erhält Risse und muss erneuert werden. Die Erfinder der vorliegenden Erfindung haben erkannt, dass dies durch das Sintern in einem geschlossenen Behälter, bevorzugt umfassend oder bestehend aus den zuvor genannten Materialien, besonders effektiv unterbunden werden kann.

Ein fünfter Aspekt der vorliegenden Erfindung betrifft ein Verfahren zur Herstellung einer Elektrode gemäß dem zweiten Aspekt der vorliegenden Erfindung umfassend ein Verfahren zur Herstellung eines polykristallinen, keramischen Festkörpers gemäß dem vierten Aspekt der vorliegenden Erfindung und umfassend einen sich daran anschließenden Schritt zum Versehen des Festkörpers mit einer elektrischen Kontaktierung.

Gemäß einer Ausführungsform erfolgt die elektrische Kontaktierung durch Aufbringen und Einbrennen einer Paste, wobei das Einbrennen bevorzugt bei einer Temperatur von 680 bis 760°C durchgeführt wird. Bevorzugt handelt es sich bei der Paste um eine Silberpaste. Silber ist auch bei hohen Temperaturen korrosionsbeständig, lötbar und erlaubt eine feste Verbindung mit dem polykristallinen, keramischen Festkörper.

Allgemeines Synthesebeispiel

Im Folgenden sollen die Verfahren gemäß dem vierten und fünften Aspekt der Erfindung an einer beispielhaften Syntheseroute weiter erläutert werden.

Die Stöchiometrie der bereitzustellenden Ausgangsstoffe, wird so gewählt, dass sie in ihrer Menge der folgenden Rezeptur entsprechen:

$$0,94*Pb(Mg_{1/3}Nb_{2/3})O_3 + 0,06*PbTiO_3 + x*PbO$$

mit

$$0 \leq x \leq 0{,}02.$$

Der eingewogene PbO-Überschuss von bis zu 0,02 mol pro 1 mol Pb der Zusammensetzung der Hauptphase verringert sich schließlich im Zuge des Sinterprozesses.

Die Herstellung erfolgt dabei ausgehend von einem Mg- und Nb-haltigen Ausgangsstoff, wie etwa $Mg_{1/3}Nb_{2/3}O_3$, z.B. nach der sogenannten Columbit-Methode. Dabei wird das der Mg- und Nbhaltige Ausgangsstoff mit einem Pb-haltigen Ausgangsstoff, z.B. $Pb_3O_4$, und einem Ti-haltigen Ausgangsstoff, z.B. $TiO_2$, nass Vermahlen (Korngröße d50 < 1 um), getrocknet und bei einer Temperatur zwischen 800-860°C kalziniert. Der Pb-haltige Ausgangsstoff wird hierzu bevorzugt im Überschuss bereitgestellt. Das fertige Umsatzpulver wird optional mit gemeinsam mit (zusätzlichem) $TiO_2$ oder $Nb_2O_5$ (0 bis 0,4 Gewichtsprozent bezogen auf das Gewicht des Umsatzpulvers) fein gemahlen und mit einem Binder, z.B. PVA-Binder versetzt. Anschließend wird das erhaltene Gemisch sprühgetrocknet, sodass ein pressfähiges Keramikgranulat entsteht. Das Granulat wird zu Grünkörpern verpresst und gesintert. Das Sintern erfolgt bei 1150-1280°C, wobei die Sintertemperatur für 1-6 Stunden gehalten wird. Zur Kontrolle des Bleihaushalts wird das Sintern in einem geschlossenen Behälter etwa in Form einer Kapsel aus MgO bei einem Volumenfüllgrad von > 30 Vol.% durchgeführt.

Der Behälter kann dabei insbesondere einen Behälterkörper und eine Behälterplatte aufweisen. Behälterkörper und Behälterplatte bilden in Kombination miteinander den Behälter. Sie werden aufeinander so angeordnet, dass der Behälter geschlossen ist.

Dieses Verfahren lässt sich einfach zum Zwecke einer Massenproduktion ausweiten, indem entsprechend große Behälter oder eine Vielzahl von Behältern im Sinterofen verwendet werden. Das Verfahren liefert polykristalline, keramische Festkörper, die frei von Nebenphasen sind.

Im Zuge des Verpressens kann die Geometrie des polykristallinen, keramischen Festkörpers gestaltet werden. Die elektrische Kontaktierung wird durch Metallisierung erhalten. Bevorzugt wird hierzu eine Silber-Paste eingesetzt, um elektrische Kontaktierungen umfassend bzw. bestehend aus Ag zu erhalten. Die Paste wird bei einer Temperatur zwischen 680-760°C eingebrannt und ist lötbar.

Figuren

Im Folgenden wird die Erfindung anhand von Figuren weiter erläutert. Dabei wird ein herkömmlicher, polykristalliner, keramischer Festkörper (Referenz) mit einem polykristallinen, keramischen Festkörper (Probe) verglichen:

Figuren 1A und 1B zeigen Rasterelektronenmikroskopie-Aufnahmen (BSE-Aufnahmen), an einem herkömmlichen (Figur 1A) und an einem (Figur 1B) Festkörper.

Figuren 2A und 2B zeigen Rasterelektronenmikroskopie-Aufnahmen (SE-Aufnahmen) an einem herkömmlichen (Figur 2A) und an einem (Figur 2B) Festkörper.

Figuren 3A und 3B zeigen Elementverteilungsbilder für das Element Magnesium an einem herkömmlichen (Figur 3A) und an einem keramischen Festkörper (Figur 3B).

Figuren 4A und 4B zeigen Tabellen mit EDX-Ergebnissen zur elementaren Zusammensetzung der Hauptphase (Figur 4A) und zur Nebenphase (Figur 4B) eines herkömmlichen keramischen Festkörpers.

Figur 5 zeigt Ergebnisse zur elementaren Zusammensetzung (EDX-Ergebnisse) der Hauptphase eines keramischen Festkörpers.

Figuren 6A und 6B zeigen EDX/EBSD-Überlagerungsbilder (EBSD = Elektronenrückstreubeugung; Engl. electron backscatter diffraction) für einen herkömmlichen (Figur 6A) und den hier offenbarten Festkörper (Figur 6B).

Figuren 7A und 7B zeigen die Ergebnisse der Auswertung der Korngrößen für einen herkömmlichen (Figur 7A) und den hier offenbarten Festkörper (Figur 7B).

Figur 8 zeigt die elektrische Kapazität versus die Temperatur für einen hier offenbarten polykristallinen keramischen Festkörper und einen herkömmlichen polykristallinen keramischen Festkörper mit Nebenphasen.

Figur 9 zeigt die Beziehung von Verlustfaktor und Temperatur für einen hier offenbarten, polykristallinen, keramischen Festkörper und einen herkömmlichen, polykristallinen, keramischen Festkörper mit Nebenphasen.

Figuren 10A und 10B zeigen einen Behälter mit Spalt (Figur 10A) und einen vollständig geschlossenen Behälter (Figur 10B) wie sie zum Herstellen der Probe und zum Herstellen von Festkörpern entsprechend der Referenz verwendet werden können.

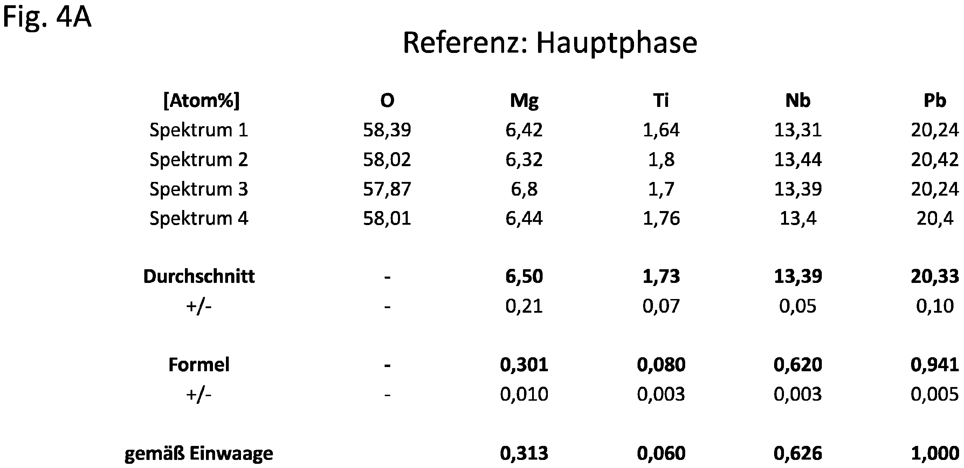

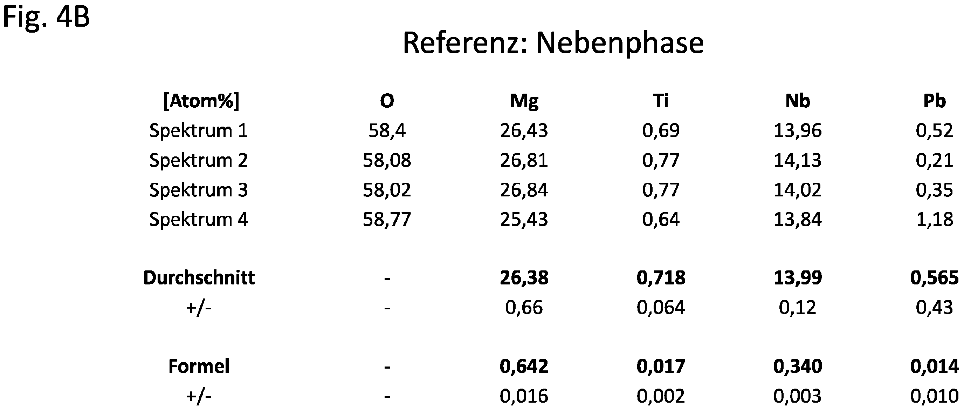

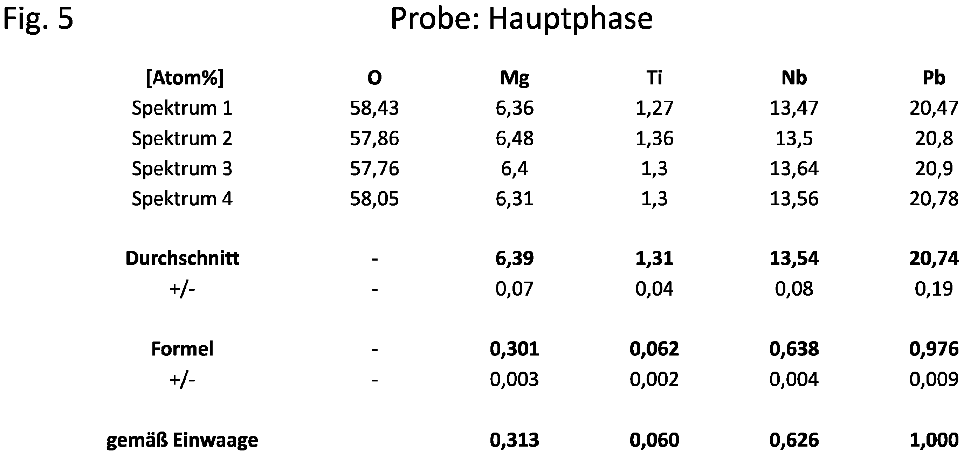

Im Folgenden werden die Figuren und Ergebnisse im Detail beschrieben:

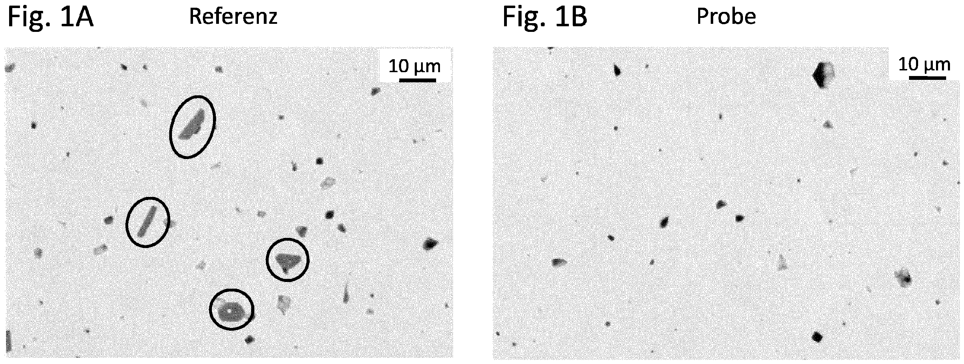

Die Figuren 1A bis 2B sind jeweils Rasterelektronenmikroskopie aufnahmen. Diese und die weiteren im Folgenden beschriebenen elektronenmikroskopischen Aufnahmen und Messergebnisse wurden an einem Zeis Merlin Compact VP Rasterelektronenmikroskop erhalten. Alle vier Aufnahmen wurden bei 1000-facher Vergrößerung bei einer Beschleunigungsspannung von 20 kV in einem Vakuum von jeweils ca.
$2,2*10^{-6}$ mbar aufgezeichnet. Die Probe, wie auch die Referenz, sind jeweils polykristalline, keramische Festkörper. Sowohl Probe wie auch Referenz wurden für die Rasterelektronenmikroskopie-Aufnahmen zersägt, eingebettet, geschliffen und poliert. Um Aufladungen zu vermeiden, wurde der Schliff mit einer dünnen Kohlenstoffschicht bedampft.

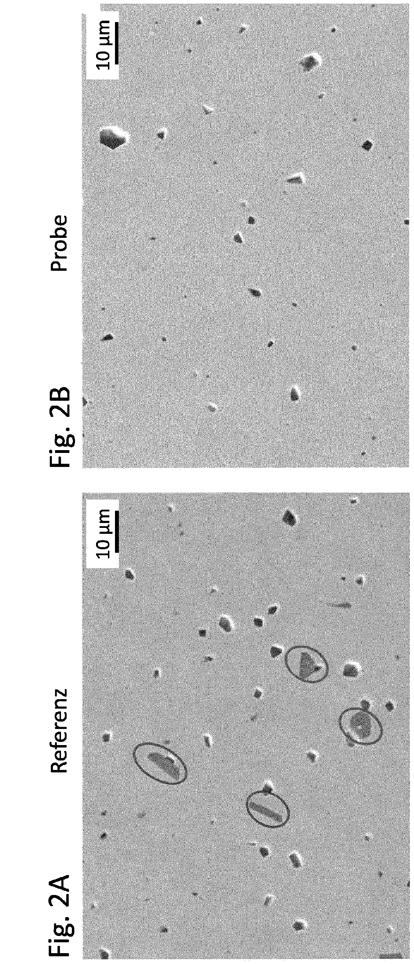

Figuren 1A und 1B zeigen Rückstreuelektronenkontrast-Bilder (BSE-Aufnahmen; BSE = backscattered electrons), von der Referenz (Figur 1A) und der Probe (Figur 1B). Figuren 2A und 2B zeigen dagegen Sekundärelektronenkontrast-Bilder (SE-Aufnahmen; SE = Sekundärelektronen), der Referenz (Figur 2A) und der Probe (Figur 2B). Die BSE- und SE-Aufnahmen der Figuren 1A und 2A wurden jeweils an der gleichen Stelle der Referenz aufgezeichnet. Ebenso wurden die BSE- und SE-Aufnahmen der Figuren 1B und 2B an der gleichen Stelle der Probe aufgezeichnet. BSE-Aufnahmen gestatten einen guten Materialkontrast (Phasenkontrast), während mittels SE-Aufnahmen mehr topografische Information erhalten werden kann. Auf den BSE-Aufnahmen von Referenz und Probe sind dunkle Stellen zu erkennen. Diese dunklen Stellen sind überwiegend auf Poren zurückzuführen, denn die Probe wie auch die Referenz weisen gleichermaßen eine gewisse, obgleich insgesamt geringfügige Porosität auf. Der helle Hintergrund ist dagegen jeweils auf die Hauptphase zurückzuführen.
Wie bereits erwähnt, erlauben SE-Aufnahmen Rückschlüsse über die Oberflächentopographie des untersuchten Festkörpers. Auch in den SE-Aufnahmen der Figuren 2A und 2B sind die dunklen Stellen zu erkennen, die auch auf den BSE-Aufnahmen zu sehen sind, jedoch erlauben es die SE-Aufnahmen der Referenz von Figur 2A zwischen zwei verschiedenen Arten von dunklen Stellen zu differenzieren, während in Figur 2B keine verschiedenen Arten von dunklen Stellen zu erkennen sind.

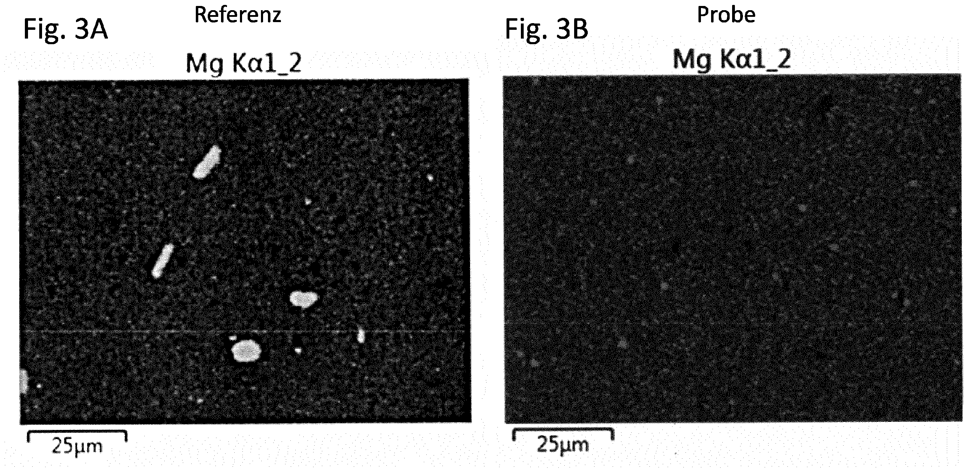

Figur 2A enthält dunkle Stellen mit heller Umrandung und solche ohne helle Umrandung. Die dunklen Stellen mit heller Umrandung sind auf Poren zurückzuführen. Die helle Umrandung wird durch die Änderung in der Topografie im Bereich einer Pore hervorgerufen. Figur 2A weist aber auch dunkle Bereiche ohne helle Umrandung auf, die nicht auf Poren, sondern auf Nebenphasen zurückzuführen sind, wie im Folgenden noch weiter erläutert werden wird. Zur Nebenphase gehörige dunkle Stellen sind in Figur 2A und auch in Figur 1A jeweils mit Hilfe von Kreisen markiert. Demgegenüber sind in Figur 2B nur Poren, aber keine Nebenphasen zu erkennen. Die Referenz zeichnet sich durch einen beträchtlichen Anteil an Nebenphasen auf, während die Probe keine Nebenphasen aufweist. Die in Figur 1A und 2A markierten Nebenphasen zeichnen sich durch eine zum Teil nadelförmige bzw. kantige Struktur aus. Sie besitzen eine andere chemische Zusammensetzung als die ansonsten helle Hauptphase, die den Hintergrund der Aufnahmen bildet. Dies wird insbesondere mit Hilfe einer Untersuchung der chemischen Zusammensetzung der Haupt- und Nebenphase der Referenz sowie der alleinigen Hauptphase der Probe deutlich (Figuren 3-5).
Figuren 3A und 3B zeigen Elementverteilungsbilder für das Element Magnesium für die Referenz (Figur 3A) und die Probe (Figur 3B), die mittels REM-EDX-Messungen erhalten wurden (EDX steht für Energiedispersive Röntgenspektroskopie). Für EDX-Messungen wurde ein Oxford SDD 80 mm$^2$ Detektor genutzt (Aztec). Die Bilder zeigen die Verteilung von Magnesium für die Referenz und die gemäß dem erfindungsgemäßen Verfahren gefertigte Probe. Die Elementverteilungsbilder zeigen wiederum dieselben Stellen, die schon in den Figuren 1 und 2 dargestellt sind. Helle Stellen zeigen einen hohen Magnesiumanteil an. Aus dem Vergleich von Figur 3A und 3B wird deutlich, dass die Referenz Mg-reiche Stellen aufweist. Die Nebenphase, die in der Referenz vorhanden ist, ist also eine Mg-reiche Nebenphase. Mit Hilfe von Elementverteilungsbildern lässt sich auch der Anteil der Nebenphase am polykristallinen, keramischen Festkörper der Referenz quantifizieren. Die Auswertung von Mg-Elementverteilungsbildern an herkömmlichen, keramischen Festkörpern zeigt einen hohen Anteil von unerwünschten Nebenphasen. So weist die Referenz eine Nebenphase auf, die bei einem Schnitt durch den Festkörper im Mittel einen Flächenanteil der Nebenphase bezogen auf eine Schnittfläche durch den Festkörper von 0,7 Prozent beträgt. Demgegenüber ist der keramische Festkörper von Figur 3B frei von Mg-reichen Stellen. Er weist keine Nebenphase auf.
Weitere Elementverteilungsbilder wurden darüber hinaus für die Elemente C, O, Ti, Nb und Pb für die Referenz sowie die Probe aufgezeichnet. Bemerkenswert ist hierbei, dass die Elementverteilungsbilder für Blei (Pb M$\alpha$1 Aufnahmen) für die Stellen, die zur Mg-reichen Nebenphase der Referenz gehören, eine Verarmung an Blei gegenüber der Hauptphase erkennen lassen. Aus den verschiedenen Elementverteilungsbildern wird deutlich, dass die Probe frei von unerwünschten Nebenphasen ist, während die Referenz eine Mg-reiche und zugleich Pb-arme Nebenphase aufweist. Die wichtigsten Ergebnisse der Untersuchung der elementaren Zusammensetzung der Hauptphase der Probe und Referenz, sowie der Nebenphase der Referenz sind in den Tabellen der Figuren 4A, 4B und 5 zusammengefasst.

Figuren 4A und 4B zeigen die EDX-Ergebnisse aus vergleichender Rasterelektronenmikrospie für die Referenz, wobei Figur 4A die EDX-Ergebnisse der Hauptphase und Figur 4B die EDX-Ergebnisse der Nebenphase des keramischen Festkörpers widergibt. Figur 5 zeigt EDX-Ergebnisse aus vergleichender Rasterelektronenmikrospie für die Probe. Es wurden jeweils 4 EDX-Spektren aufgezeichnet. Die gemessenen Anteile der Elemente O, Mg, Ti, Nb und Pb sind für jedes Spektrum in Atomprozent aufgetragen. Aus den 4 Spektren wurde jeweils der Durchschnittswert für die Anteile an Mg, Ti, Nb und Pb gebildet. Erfahrungsgemäß wird bei EDX-Messungen der Anteil leichter Elemente, wie Sauerstoff unterschätzt. Eine Normierung zur Ermittlung der Summenformel wurde daher zweckmäßiger Weise so vorgenommen, dass der Gesamtgehalt von Mg + Ti + Nb in der Summe 1 entspricht. Die so erhaltenen Koeffizienten der zugehörigen chemischen Formel sind ebenfalls jeweils den Tabellen zu entnehmen. Für die Hauptphase wurden zudem jeweils die auf der Basis der Einwaage erwarteten Koeffizienten angegeben. Ein Vergleich von Figur 4A und 5 ergibt, dass im Falle der erfindungsgemäßen Probe der Blei-Anteil weniger von der idealen Zusammensetzung abweicht. Der Blei-Gehalt der Hauptphase der Referenz ist mit 0,941 deutlich niedriger als der Idealwert 1,0. Demgegenüber kommt die Hauptphase der Probe dem Idealwert deutlich näher. Schließlich lassen sich aus Figur 4B Rückschlüsse über die chemische Zusammensetzung der Nebenphase ziehen. Wie bereits zuvor erwähnt, ist die Nebenphase reich an Mg und arm an Pb. Der Nb-Gehalt ist geringfügig höher als in der Hauptphase. Ohne durch die Theorie gebunden zu sein scheint die Nebenphase am ehesten durch eine Formel $Mg_{2/3}Nb_{1/3}O_3$-Phase zu beschreiben zu sein.

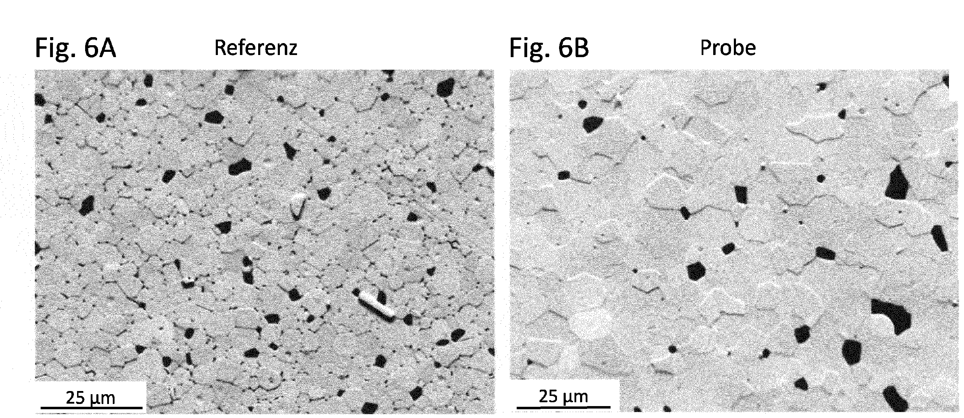

Figuren 6A und 6B zeigen EDX/EBSD-Überlagerungsbilder (EBSD = Elektronenrückstreubeugung; Engl. electron backscatter diffraction) der Referenz (Figur 6A) und der Probe (Figur 6B). Für die Aufnahmen wurde ein FSD (engl. Forward Scatter Detector) verwendet. Die EBSD-Messungen wurden an geätzten Proben durchgeführt. Dabei wurden für die Referenz und Probe jeweils die folgenden Einstellungen gewählt: Beschleunigungsspannung 20,00 kV; Probenkippung (Grad) 69,99°; Trefferquote 94,25% bis 94,99%; Aufnahmegeschwindigkeit 66,25 bis 66,35 Hz. Die Phasen für die Aufnahmen waren bezogen auf die Phase $Pb(Mg_{1/3}Nb_{2/3})O_3$: a = 4,05 Å; b = 4,05 Å; c = 4,05 Å; $\alpha$ = 90,00°; $\beta$ = 90,00°; $\gamma$ = 90,00°; Raumgruppe 221; Datenbank ICSD. Aus den Abbildungen lassen sich insbesondere die Korngrößen der Kristallite der Referenz und der Probe gut miteinander vergleichen. Die Probe zeichnet sich durch deutlich größere Korngrößen aus.

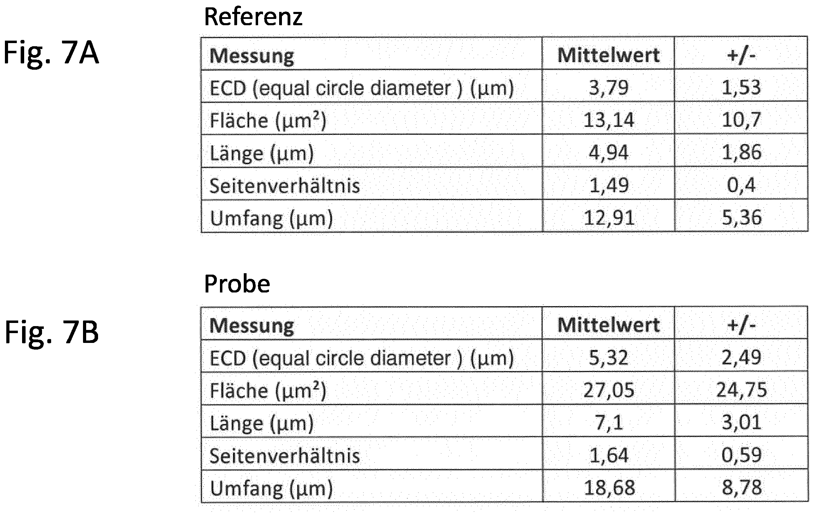

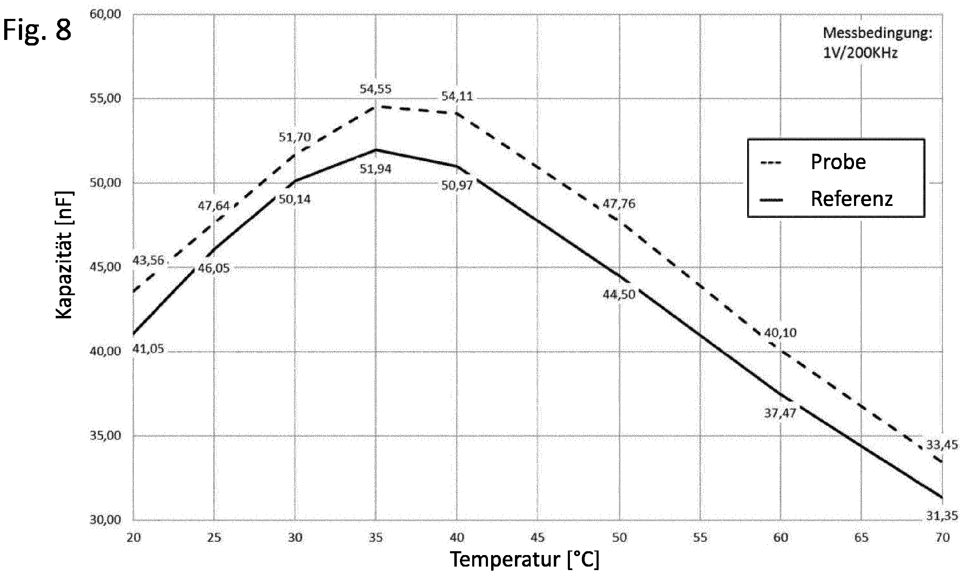

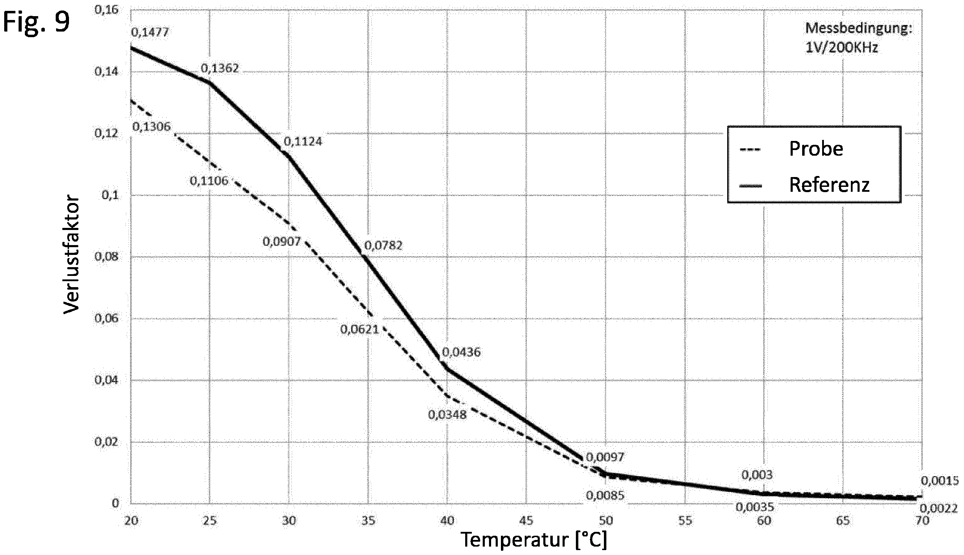

Eine quantitative Auswertung der Unterschiede in den Korngrößen ist in den Figuren 7A und 7B gezeigt. Die Bestimmung des Kreisäquivalenten Durchmessers (ECD) wurde bereits zuvor erläutert. Aus Figuren geht insbesondere hervor, dass die erfindungsgemäße Probe (Figuren 7B) mit 5,32 $\mu$m einen deutlich größeren $d_{50}$, gemessen als zahlenbezogener Medianwert durch statische Bildanalyse, aufweist, als die Referenz mit 3,79 $\mu$m (Figuren 7A). Die gesamte Verteilung der Korngrößen ist bei der Probe verglichen zur Referenzprobe somit zu größeren Korngrößen verschoben. Dies zeigt, dass das erfindungsgemäße Verfahren, mittels welchem die Probe gefertigt wurde, nicht nur zur Vermeidung von Nebenphasen, sondern zugleich auch zu größeren Kristalliten führt, wodurch verbesserte elektrische Kapazitäten (Figur 8) und geringere Leistungsverluste (Figur 9) erreicht werden.

Figur 8 vergleicht die elektrischen Kapazitäten der Probe und der Referenz. Die Grafen zeigen die Abhängigkeit der elektrischen Kapazität, angegeben in Nanofarad [nF], von der Temperatur in Grad Celsius [°C]. Die Messungen wurden jeweils bei 200 kHz und 1 V durchgeführt. Beide Festkörper weisen ein Maximum der elektrischen Kapazität im Bereich einer Temperatur zwischen 30 und 42°C auf. Dies ist auf die vergleichbare chemische Zusammensetzung der Hauptphase zurückzuführen.. Aus dem Vergleich der erhaltenen Messkurven wird deutlich, dass die elektrische Kapazität der Probe über den gesamten gemessenen Temperaturbereich durchgehend deutlich höher ist, als die elektrische Kapazität der Referenz. Die Kapazität ist im Mittel um ca. 5% höher für die erfindungsgemäße Probe.

Figur 9 zeigt die Abhängigkeit des Verlustfaktors von der Temperatur in Grad Celsius [°C]. Die Messungen wurden jeweils bei 200 kHz und 1 V durchgeführt. Für Probe und Referenz fällt der Verlustfaktor mit zunehmender Temperatur ab. Im Gegensatz zur Referenz ist der Verlustfaktor für den wichtigen Temperaturbereich zwischen 20 und 45°C jedoch deutlich niedriger, was bedeutet, dass bei einer Anwendung des erfindungsgemäßen Festkörpers in Elektroden geringe Leistungsverluste erhalten werden. Dies führt zu einer höheren Effizienz und vor allem zu einer geringeren Selbsterwärmung.

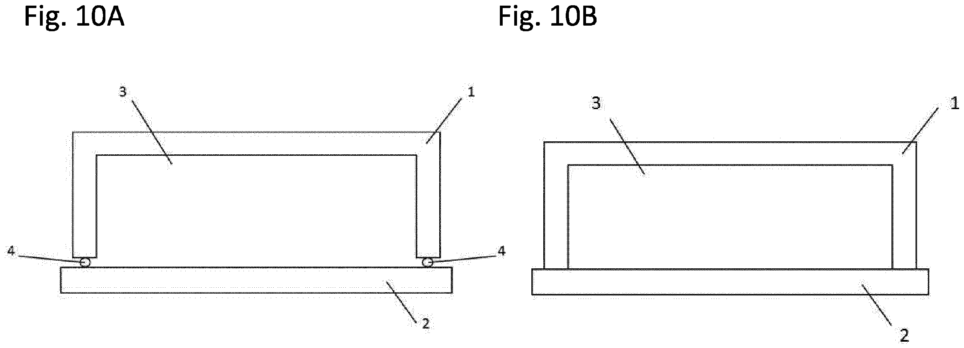

Figuren 10A und 10B veranschaulichen, wie die Referenz und die Probe, wie sie in den Figuren 1-9 beschrieben sind erhalten werden können. Die Probe ist ein polykristalliner, keramischer Festkörper gemäß dem ersten Aspekt, der mit Hilfe des erfindungsgemäßen Verfahrens erhalten wurde. Dabei wurde der Sinterschritt F) in einem Behälter gemäß Figur 10B mit einem Behälterkörper (1) und einer Behälterplatte (2) vollzogen. Gemeinsam bilden sie einen geschlossenen Behälter in dessen Innenraum (3) der Sinterschritt F) des erfindungsgemäßen Verfahrens vollzogen wird. Hierzu werden ein oder mehrere Grünkörper im Innenraum (3) des geschlossenen Behälters angeordnet. Der geschlossene Behälter bildet ein geschlossenes System, das ein Ausgasen von PbO verhindert. Die Form des Behälters kann variiert werden. Das Material des Behälters wird so gewählt, dass es nicht zur Absorption von PbO geeignet ist und PbO undurchlässig ist, sodass eine besonders effektive Kontrolle des Bleihaushalts beim Sintern ermöglicht wird. Demgegenüber werden herkömmliche polykristalline keramische Festkörper, die für hochkapazitive Elektroden zur Behandlung von Patienten benötigt werden, nicht unter ausreichender Kontrolle des Bleihaushalts gesintert. Dies führt zum Ausgasen von PbO beim Sintern und somit zu Inhomogenitäten im Festkörper. Vor allem konnten die Erfinder der vorliegenden Erfindung herausfinden, dass dies verantwortlich ist für die Bildung von unerwünschten Nebenphasen, wie sie in herkömmlichen keramischen Festkörpern zu finden sind. Die Nebenphasen führen zur Herabsetzung der Kapazität und verleihen herkömmlichen keramischen Festkörpern, eine gelbe Farbtönung.

Die Folgen einer mangelnden Bleihaushaltkontrolle werden am Beispiel der Referenz aufgezeigt. Die Referenz kann durch ein Sintern in einer Anordnung gemäß Figur 10A erhalten werden.

Figur 10A zeigt einen Behälterkörper (1) und die Behälterplatte (2) sowie Mittel zum Vorsehen eines Spalts (4) zwischen Behälterkörper und Behälterplatte. Der Behälter von Figur 10A weist also einen Spalt auf. Die Größe des Spalts beträgt 5 mm. Zwischen dem Innenraum (3) des Behälters und der Umgebung ist somit ein gewisser Gasaustausch möglich.

Dies führt dazu, dass ein Teil von Pb des Festkörpers beim Sintern in Form von PbO freigesetzt wird. Die auf diesem Wege erhaltene Referenz besitzt im Gegensatz zur Probe eine gelbe Farbtönung.

Synthese der Probe und Referenz

Die Probe und Referenz wurden wie folgt erhalten:
In beiden Fällen wurden zunächst Grünkörper derselben Zusammensetzung hergestellt. Hierzu wurden jeweils 34,9494 kg $Mg_{1/3}Nb_{2/3}O_2$, 83,8043 kg $Pb_3O_4$ und 1,7488 kg $TiO_2$ eingewogen.

Die Ausgangsstoffe wurden auf eine Zielkorngröße d50 von etwa 1,0 $\mu$m in 100 Liter deionisiertem Wasser vorgemahlen. Die so erhaltene Mischung wurde einer Sprühtrocknung unterzogen.

Danach wurde die Mischung bei 820°C für 6 Stunden kalziniert, auf eine Korngröße d50 von ca. 0,8 $\mu$m gemahlen und mit 3 Gewichtsprozent PVA-Binder sprühgranuliert.

Aus dem Keramikgranulat wurden die Grünkörper durch Pressen gefertigt. Die Pressdichte betrug 4,8 g/ml. Die Grünkörper wurden bei 450°C entkohlt.

Die Probe wurde durch Sintern in einem geschlossenen MgO-Behälter gemäß Figur 10B erhalten. Die Referenz wurde durch Sintern in einem MgO-Behälter gemäß Figur 10A erhalten. Der Spalt betrug hierbei 5 mm. Als Sintertemperatur wurden jeweils 1250°C gewählt. Die Haltezeit bei 1250°C betrug 4 Stunden. Der Volumenfüllgrad im Fall der Probe betrug ca. 45 Vol.%.

Die Erfindung ist nicht durch die Beschreibung anhand der Ausführungsbeispiele beschränkt.

**Patentansprüche**

1. Verfahren zur Herstellung eines polykristallinen, keramischen Festkörpers aufweisend

   - eine Hauptphase mit einer Zusammensetzung der folgenden allgemeinen Formel:

$$(1-y)\,Pb_a(Mg_bNb_c)\,O_{3-e}\ +\ yPb_aTi_dO_3$$

   mit

$$0,055 \leq y \leq 0,065$$

$$0,95 \leq a \leq 1,02;$$

$$0,29 \leq b \leq 0,36;$$

$$0,63 \leq c \leq 0,69;$$

$$0,9 \leq d \leq 1,1;$$

$$0 \leq e \leq 0,1;$$

- und optional eine oder mehrere Nebenphasen,
wobei bei jedem Schnitt durch den Festkörper der Flächenanteil der Nebenphasen bezogen auf eine beliebige Schnittfläche durch den Festkörper kleiner oder gleich 0,5 Prozent ist
oder wobei der Festkörper frei von Nebenphasen ist, umfassend die Verfahrensschritte:

A) Bereitstellen von Ausgangsstoffen umfassend die Elemente Mg, Nb, Ti und Pb;
B) Erzeugen einer Mischung umfassend die Ausgangsstoffe
C) Kalzinieren der Mischung zum Erzeugen einer kalzinierten Mischung
E) Verarbeitung der kalzinierten Mischung zu einem Grünkörper
F) Sintern des Grünkörpers,

wobei zur Kontrolle des Bleihaushalts

- Schritt F) in einem geschlossenen Behälter erfolgt, wobei der geschlossene Behälter (1,2) einen Innenraum (3) aufweist, in welchem ein oder mehrere Grünkörper angeordnet sind, sodass der Volumenfüllgrad aller Grünkörper bezogen auf das Volumen des Innenraums (3) mindestens 30 Vol.% beträgt.

2. Verfahren gemäß dem vorherigen Anspruch, wobei in Schritt A) oder einem anderem der Schritt F) vorausgehenden Schritte ein Pb aufweisender Ausgangsstoff im Überschuss zugegeben wird.

3. Verfahren gemäß einem der Ansprüche 1 oder 2, wobei in Schritt A) ein erster Ausgangsstoff bereitgestellt wird, bei dem es sich um $Mg_{1/3}Nb_{2/3}O_2$ handelt.

4. Verfahren gemäß einem der Ansprüche 1 bis 3, wobei in Schritt A) ein zweiter Ausgangsstoff bereitgestellt wird bei dem es sich um $TiO_2$ handelt.

5. Verfahren gemäß einem der Ansprüche 1 bis 4, wobei in Schritt A) ein dritter Ausgangsstoff bereitgestellt wird, bei dem es sich um PbO oder um $Pb_3O_4$ handelt.

6. Verfahren gemäß einem der Ansprüche 1 bis 5, wobei das Mischen der Ausgangsstoffe in Schritt B) mittels Nass-Vermahlen erfolgt.

7. Verfahren gemäß einem der Ansprüche 1 bis 6, wobei das Kalzinieren in Schritt C), bei einer Temperatur zwischen 800 und 860°C durchgeführt wird.

8. Verfahren nach einem der Ansprüche 1 bis 7, umfassend einen Schritt D), bei welchem $TiO_2$ und/oder $Nb_2O_5$ zur kalzinierten Mischung zugegeben wird, wobei der Anteil an zugegebenem $TiO_2$ und/oder $Nb_2O_5$ bezogen auf das Gewicht der kalzinierten Mischung bevorzugt 0,01 bis 0,4 Gewichtsprozent beträgt.

9. Verfahren nach einem der Ansprüche 1 bis 8, wobei Schritt E) umfasst:

- Mahlen der kalzinierten Mischung,
- Versetzen der kalzinierten Mischung mit einem Binder,
- Sprühtrocknen der kalzinierten Mischung mit Binder zur Erzeugung eines Keramikgranulats
- Verpressen des Keramikgranulats zur Erzeugung des Grünkörpers.

10. Verfahren nach einem der Ansprüche 1 bis 9, wobei Schritt F) bei einer Temperatur von 1150 bis 1280°C durchgeführt wird.

11. Verfahren gemäß einem der Ansprüche 1 bis 10, wobei der geschlossene Behälter bevorzugt zumindest eines der Materialien ausgewählt aus der Gruppe von $Al_2O_3$, $ZrO_2$ und MgO enthält oder daraus besteht.

12. Verfahren gemäß Anspruch 11, wobei der Volumenfüllgrad aller Grünkörper im Innenraum (3) des geschlossenen Behälters bezogen auf das Volumen des Innenraums (3) mindestens 40 Vol.% beträgt.

**13.** Verfahren zur Herstellung einer Elektrode, die den polykristallinen, keramischen Festkörper und eine auf dem Festkörper aufgebrachte elektrische Kontaktierung aufweist, umfassend ein Verfahren zur Herstellung eines polykristallinen, keramischen Festkörpers gemäß einem der Ansprüche 1 bis 12 und einen sich daran anschließenden Schritt zum Versehen des Festkörpers mit einer elektrischen Kontaktierung.

**14.** Verfahren nach dem vorherigen Anspruch, wobei die elektrische Kontaktierung durch Aufbringen und Einbrennen einer Paste erfolgt, wobei das Einbrennen bevorzugt bei einer Temperatur von 680 bis 760°C durchgeführt wird.

**Claims**

**1.** Process for producing a polycrystalline ceramic solid body having

- a main phase having a composition of the following general formula:

$$(1-y)\,Pb_a(Mg_bNb_c)O_{3-e} \;+\; yPb_aTi_dO_3$$

where

$$0.055 \leq y \leq 0.065$$

$$0.95 \leq a \leq 1.02;$$

$$0.29 \leq b \leq 0.36;$$

$$0.63 \leq c \leq 0.69;$$

$$0.9 \leq d \leq 1.1;$$

$$0 \leq e \leq 0.1;$$

- and optionally one or more secondary phases, wherein, in any section through the solid body, the area proportion of the secondary phases based on an arbitrary cross section through the solid body is less than or equal to 0.5 percent
or wherein the solid body is free of secondary phases,
comprising the process steps of:

     A) providing starting materials comprising the elements Mg, Nb, Ti and Pb,
     B) producing a mixture comprising the starting materials,
     C) calcining the mixture to produce a calcined mixture,
     E) processing the calcined mixture into a preform,
     F) sintering the preform,

wherein, to control the lead balance,
- step F) is carried out in a closed container, wherein the closed container (1, 2), has an inner space (3) in which one or more preforms are arranged, such that the volume fill level of all the preforms, based on the volume of the inner space (3), is at least 30% by volume.

**2.** Process according to the preceding claim, wherein, in step A) or in another step preceding step F), a Pb-containing starting material is added in excess.

3. Process according to either of Claims 1 or 2, wherein, in step A), a first starting material is provided that is $Mg_{1/3}Nb_{2/3}O_2$.

4. Process according to any of Claims 1 to 3, wherein, in step A), a second starting material is provided that is $TiO_2$.

5. Process according to any of Claims 1 to 4, wherein, in step A), a third starting material is provided that is PbO or $Pb_3O_4$.

6. Process according to any of Claims 1 to 5, wherein the mixing of the starting materials in step B) is effected by wet milling.

7. Process according to any of Claims 1 to 6, wherein the calcining in step C) is carried out at a temperature between 800 and 860°C.

8. Process according to any of Claims 1 to 7, comprising a step D), in which $TiO_2$ and/or $Nb_2O_5$ is added to the calcined mixture, wherein the proportion of $TiO_2$ and/or $Nb_2O_5$ added, based on the weight of the calcined mixture, is preferably 0.01 to 0.4 percent by weight.

9. Process according to any of Claims 1 to 8, wherein step E) comprises:

   - milling the calcined mixture,
   - admixing the calcined mixture with a binder,
   - spray-drying the calcined mixture with binder to produce a ceramic granulate,
   - pressing the ceramic granulate to produce the preform.

10. Process according to any of Claims 1 to 9, wherein step F) is carried out at a temperature of 1150 to 1280°C.

11. Process according to any of Claims 1 to 10, wherein the closed container preferably comprises at least one of the materials selected from the group of $Al_2O_3$, $ZrO_2$ and MgO or consists thereof.

12. Process according to Claim 11, wherein the volume fill level of all preforms in the inner space (3) of the closed container, based on the volume of the inner space (3), is at least 40% by volume.

13. Process for producing an electrode that includes the polycrystalline ceramic solid body and an electrical contact applied on the solid body, comprising a process for producing a polycrystalline ceramic solid body according to any of Claims 1 to 12 and a subsequent step of providing the solid body with an electrical contact.

14. Process according to the preceding claim, wherein the electrical contact is effected by applying and baking a paste, wherein the baking is carried out preferably at a temperature of 680 to 760°C.

**Revendications**

1. Procédé de préparation d'un corps solide céramique, polycristallin, présentant

   - une phase principale présentant une composition selon la formule générale suivante :

$$(1-y)\,Pb_a(Mg_bNb_c)\,O_{3-e} \; + \; yPb_aTi_dO_3$$

   dans laquelle

$$0,055 \leq y \leq 0,065 \; ;$$

$$0,95 \leq a \leq 1,02 \; ;$$

$$0,29 \leq b \leq 0,36 \ ;$$

$$0,63 \leq c \leq 0,69 \ ;$$

$$0,9 \leq d \leq 1,1 \ ;$$

$$0 \leq e \leq 0,1 \ ;$$

- et éventuellement une ou plusieurs phases secondaires,
la proportion surfacique des phases secondaires, par rapport à une surface de coupe quelconque à travers le corps solide, lors de chaque coupe à travers le corps solide, étant inférieure ou égale à 0,5%
ou le corps solide étant exempt de phases secondaires, comprenant les étapes de procédé :

    A) mise à disposition de substances de départ comprenant les éléments Mg, Nb, Ti et Pb ;
    B) génération d'un mélange comprenant les substances de départ ;
    C) calcination du mélange pour générer un mélange calciné ;
    E) transformation du mélange calciné en un corps cru ;
    F) frittage du corps cru ;

où, pour la régulation de la gestion du plomb,
- l'étape F) est effectuée dans un récipient fermé, le récipient fermé (1,2) présentant un espace interne (3) dans lequel un ou plusieurs corps crus sont agencés de telle sorte que le degré de remplissage volumique de tous les corps crus, par rapport au volume de l'espace interne (3), est d'au moins 30% en volume.

2. Procédé selon la revendication précédente, dans lequel, dans l'étape A) ou dans une autre étape précédant l'étape F), une substance de départ présentant du pb est ajoutée en excès.

3. Procédé selon l'une des revendications 1 ou 2, dans lequel, dans l'étape A), une première substance de départ est mise à disposition, pour laquelle il s'agit de $Mg_{1/3}Nb_{2/3}O_2$.

4. Procédé selon l'une des revendications 1 à 3, dans lequel, dans l'étape A), une deuxième substance de départ est mise à disposition, pour laquelle il s'agit de $TiO_2$.

5. Procédé selon l'une des revendications 1 à 4, dans lequel, dans l'étape A), une troisième substance de départ est mise à disposition, pour laquelle il s'agit de PbO ou de $Pb_3O_4$.

6. Procédé selon l'une des revendications 1 à 5, le mélange des substances de départ dans l'étape B) ayant lieu au moyen d'un broyage par voie humide.

7. Procédé selon l'une des revendications 1 à 6, la calcination dans l'étape C) étant réalisée à une température entre 800°C et 860°C.

8. Procédé selon l'une des revendications 1 à 7, comprenant une étape D) dans laquelle du $TiO_2$ et/ou du $Nb_2O_5$ est/sont ajouté(s) au mélange calciné, la proportion de $TiO_2$ et/ou de $Nb_2O_5$ ajouté (s), par rapport au poids du mélange calciné, étant de préférence de 0,01 à 0,4% en poids.

9. Procédé selon l'une des revendications 1 à 8, l'étape E) comprenant :

    - le broyage du mélange calciné,
    - l'ajout d'un liant au mélange calciné,
    - le séchage par pulvérisation du mélange calciné avec le liant pour générer un granulat en céramique,
    - la compression du granulat en céramique pour générer le corps cru.

10. Procédé selon l'une des revendications 1 à 9, l'étape F) étant réalisée à une température de 1150 à 1280°C.

**11.** Procédé selon l'une des revendications 1 à 10, le récipient fermé contenant ou étant constitué par de préférence au moins l'un des matériaux choisis dans le groupe constitué par $Al_2O_3$, $ZrO_2$ et MgO.

**12.** Procédé selon la revendication 11, le degré de remplissage volumique de tous les corps crus dans l'espace interne (3) du récipient fermé, par rapport au volume de l'espace interne (3), étant d'au moins 40% en volume.

**13.** Procédé de fabrication d'une électrode, qui présente le corps solide céramique, polycristallin et un contact électrique appliqué sur le corps solide, comprenant un procédé de préparation d'un corps solide céramique, polycristallin, selon l'une des revendications 1 à 12 et une étape consécutive à celle-ci destinée à pourvoir le corps solide d'un contact électrique.

**14.** Procédé selon la revendication précédente, le contact électrique étant effectué par application et cuisson d'une pâte, la cuisson étant de préférence réalisée à une température de 680 à 760°C.

Fig. 1B   Probe

Fig. 1A   Referenz

Fig. 2B    Probe

Fig. 2A    Referenz

Fig. 3A  Referenz  Mg Kα1_2

Fig. 3B  Probe  Mg Kα1_2

25µm

25µm

EP 3 765 427 B1

## Fig. 4A

### Referenz: Hauptphase

| [Atom%] | O | Mg | Ti | Nb | Pb |
|---|---|---|---|---|---|
| Spektrum 1 | 58,39 | 6,42 | 1,64 | 13,31 | 20,24 |
| Spektrum 2 | 58,02 | 6,32 | 1,8 | 13,44 | 20,42 |
| Spektrum 3 | 57,87 | 6,8 | 1,7 | 13,39 | 20,24 |
| Spektrum 4 | 58,01 | 6,44 | 1,76 | 13,4 | 20,4 |
| | | | | | |
| **Durchschnitt** | - | **6,50** | **1,73** | **13,39** | **20,33** |
| +/- | - | 0,21 | 0,07 | 0,05 | 0,10 |
| | | | | | |
| **Formel** | - | **0,301** | **0,080** | **0,620** | **0,941** |
| +/- | - | 0,010 | 0,003 | 0,003 | 0,005 |
| | | | | | |
| **gemäß Einwaage** | | **0,313** | **0,060** | **0,626** | **1,000** |

EP 3 765 427 B1

## Fig. 4B

### Referenz: Nebenphase

| [Atom%] | O | Mg | Ti | Nb | Pb |
|---|---|---|---|---|---|
| Spektrum 1 | 58,4 | 26,43 | 0,69 | 13,96 | 0,52 |
| Spektrum 2 | 58,08 | 26,81 | 0,77 | 14,13 | 0,21 |
| Spektrum 3 | 58,02 | 26,84 | 0,77 | 14,02 | 0,35 |
| Spektrum 4 | 58,77 | 25,43 | 0,64 | 13,84 | 1,18 |
| | | | | | |
| **Durchschnitt** | - | **26,38** | **0,718** | **13,99** | **0,565** |
| +/- | - | 0,66 | 0,064 | 0,12 | 0,43 |
| | | | | | |
| **Formel** | - | **0,642** | **0,017** | **0,340** | **0,014** |
| +/- | - | 0,016 | 0,002 | 0,003 | 0,010 |

EP 3 765 427 B1

# Fig. 5

## Probe: Hauptphase

| [Atom%] | O | Mg | Ti | Nb | Pb |
|---|---|---|---|---|---|
| Spektrum 1 | 58,43 | 6,36 | 1,27 | 13,47 | 20,47 |
| Spektrum 2 | 57,86 | 6,48 | 1,36 | 13,5 | 20,8 |
| Spektrum 3 | 57,76 | 6,4 | 1,3 | 13,64 | 20,9 |
| Spektrum 4 | 58,05 | 6,31 | 1,3 | 13,56 | 20,78 |
| **Durchschnitt** | - | **6,39** | **1,31** | **13,54** | **20,74** |
| +/- | - | 0,07 | 0,04 | 0,08 | 0,19 |
| **Formel** | - | **0,301** | **0,062** | **0,638** | **0,976** |
| +/- | - | 0,003 | 0,002 | 0,004 | 0,009 |
| **gemäß Einwaage** | | **0,313** | **0,060** | **0,626** | **1,000** |

EP 3 765 427 B1

Fig. 6B   Probe   25 µm

Fig. 6A   Referenz   25 µm

## Fig. 7A

**Referenz**

| Messung | Mittelwert | +/- |
|---|---|---|
| ECD (equal circle diameter ) (μm) | 3,79 | 1,53 |
| Fläche (μm²) | 13,14 | 10,7 |
| Länge (μm) | 4,94 | 1,86 |
| Seitenverhältnis | 1,49 | 0,4 |
| Umfang (μm) | 12,91 | 5,36 |

## Fig. 7B

**Probe**

| Messung | Mittelwert | +/- |
|---|---|---|
| ECD (equal circle diameter ) (μm) | 5,32 | 2,49 |
| Fläche (μm²) | 27,05 | 24,75 |
| Länge (μm) | 7,1 | 3,01 |
| Seitenverhältnis | 1,64 | 0,59 |
| Umfang (μm) | 18,68 | 8,78 |

EP 3 765 427 B1

Fig. 8

Messbedingung:
1V/200KHz

- - - Probe

—— Referenz

Kapazität [nF]

Temperatur [°C]

EP 3 765 427 B1

28

Fig. 9

Messbedingung:
1V/200KHz

Verlustfaktor

Temperatur [°C]

- - - Probe
—— Referenz

0,1477
0,1362
0,1306
0,1124
0,1106
0,0907
0,0782
0,0621
0,0436
0,0348
0,0097
0,0085
0,003
0,0035
0,0015
0,0022

EP 3 765 427 B1

EP 3 765 427 B1

Fig. 10B

Fig. 10A

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Nicht-Patentliteratur**

- **JOE KELLY et al.** *J. Am. Ceram. Soc.,* 01. Januar 1997, 957-61